# EUROPEAN PATENT SPECIFICATION

(11) **EP 1 671 459 B1**
(45) Date of publication and mention of the grant of the patent: **14.09.2011**
(21) Application number: 04789215.3
(22) Date of filing: 30.09.2004
(51) Int. Cl.: H04L 12/66, H04L 29/06

(54) **MEDIA GATEWAY FOR VOICE OVER IP DATA TRAFFIC**
MEDIA GATEWAY FÜR VOICE-OVER-IP DATENVERKEHR
PASSERELLE MEDIA POUR LE TRAFIC DE DONNÉES DE VOIX SUR IP

(30) Priority: 01.10.2003 US 676233; 01.12.2003 US 526126 P; 10.03.2004 US 551814 P; 17.09.2004 US 943513; 17.09.2004 US 943275
(43) Date of publication of application: 21.06.2006
(73) Proprietor: Genband, Inc., Plano, TX 75074 (US)
(72) Inventor: ZHU, Rupert, Richardson, TX 75082 (US); LU, David, Z., Dallas, TX 75287 (US); LI, San-Qi, Plano, TX 75093 (US); QIAN, Edward, Y., Plano, TX 75093 (US)
(74) Representative: Reinhard - Skuhra - Weise & Partner GbR
(86) International application number: PCT/US2004/031920
(87) International publication number: WO 2005/034454

(56) References cited:
- WO-A-01/43387
- GB-A- 2 363 549
- US-A1- 2002 176 374
- US-A1- 2003 118 039
- US-A1- 2003 142 795
- US-B1- 6 714 535
- YOO H.-K.: 'A Media Stream Processing of VoIP Media Gateway' APCC 2003. THE 9TH ASIA-PACIFIC CONFERENCE ON COMMUNICATIONS vol. 1, 21 September 2003 - 24 September 2003, pages 91 - 94, XP010688003

## Description

### Related Applications

This application is a continuation of corresponding U.S. Patent Application No. 10/943,275, filed September 17, 2004, which is a continuation-in-part of U.S. Patent Application Serial No. 10/676,233, filed October 1, 2003, and is a continuation-in-part of U.S. Patent Application No. 10/943,513, filed September 17, 2004, which is also a continuation-in-part of U.S. Patent Application Serial No. 10/676,233 filed October 1, 2003, and this application further claims the benefit of U.S. Provisional Patent Application Serial No. 60/526,126, filed December 1, 2003, and U.S. Provisional Patent Application Serial No. 60/551,814, filed March 10, 2004.

### Technical Field

The present invention relates to methods, systems, and computer program products for providing voice over IP traffic engineering and path resilience. More particularly, the present invention relates to methods and systems for providing VoIP traffic engineering and path resilience using a network-aware media gateway.

### Related Art

International Patent Application WO 01/43387 A2 shows an apparatus for distributing SS7 Message Transfer Part Level 2 (MTPL2) between a Media Gateway and a Signaling Gateway in a Voice over IP Switch.

Recently in modern telephony, voice service providers and carriers have been transitioning from the traditional Time Division Multiplexing (TDM) network infrastructures to IP-based networks. Utilizing IP-based networks, voice traffic can be converted into packets and carried over IP networks. Although an IP network can be utilized to carry voice traffic, voice and data have very different characteristics. Thus, traditional TDM networks, which were designed for voice traffic, differ significantly from IP networks in terms of their capabilities, working mechanisms, and operation.

In a TDM network, voice traffic is directed from node to node based on statically provisioned routing tables. Routing is applied on a per call basis. Once the route for a call is selected, it is typically not changed for the duration of the call. Different calls from the same source to the same destination can be distributed over multiple different paths based on a set of provisioned policy rules, such as traffic loading of the links, time-of-day, a nd costs. The capability of distributing traffic among multiple paths is referred to as traffic engineering. In TDM networks, traffic is symmetric in both directions, its patterns are predictable, and voice quality is ensured. TDM networks are typically reliable because redundant protection and fail-over mechanisms are integral parts of the structure. Any failure triggers alarms and events for easy tracing to the root cause, and appropriate actions, such as voice call rerouting, can be taken to minimize service disruption.

Some of the important features of TDM networks include traffic engineering and load balancing. TDM networks can allocate calls over a set of eligible trunk groups based on preference, cost, policy, or dynamic performance monitoring. For example, some telephony providers may have a predetermined bandwidth price schedule based on time-of-day and day-of-week. To minimize cost, a telephony switch manager can pre-program its trunk selection algorithm accordingly, so that new calls are allocated over the trunk group incur the lowest cost during that time period. The price of bandwidth may also change more dynamically. In such instances, it is important for telephony switch managers to be able to quickly adjust the trunk group selection algorithm.

Another important feature of TDM networks includes physical layer redundancy mechanisms, such as facility protection and Synchronous Optical Network (SONET) line and ring protection. When a network failure occurs, the affected traffic can be automatically switched over to an alternative physical path in TDM networks. This fail-over is transparent to the telephony layer.

TDM networks also include a full set of failure notification functions. If a non-recoverable network failure occurs, a notification, such as an Alarm Indication Signal (AIS) or Remote Defect Indication (RDI), can be sent along a transmission path to the telephone switch. The switch can alarm a network operator and take suitable actions on affected calls. This feature of TDM networks can provide a TDM network operator with knowledge about call status and quality.

Traffic engineering, fail-over, network surveillance, and reporting are very important features in TDM networks for assuring optimum bandwidth utilization, Quality of Service (QoS), cost reduction, and traffic resilience. IP telephony has not been fully developed to provide many of these features. Therefore, it is desirable to include these features in IP networks and, in particular, Voice over IP (VoIP) deployment.

Some of the lack of features in IP telephony and VoIP deployment can be traced to the implementation of media gateways (MGs) and media gateway controllers (MGCs). Media gateways are typically used for media stream switching and, in particular, voice traffic switching. Media stream switching includes switching media packets between input and output ports and converting the media packets into the appropriate formats for the sending and receiving parties. Call control, which includes setting up and tearing down calls and maintaining call state machines, is performed by a media gateway controller. Media gateway controllers communicate call control information to media gateways via a media gateway control protocol. Typical media gateway control protocols, such as MGCP and MEGACO, include commands for communicating information about each endpoint of a session to the media gateway and instructing the media gateway as to how to process packets to be delivered to each endpoint.

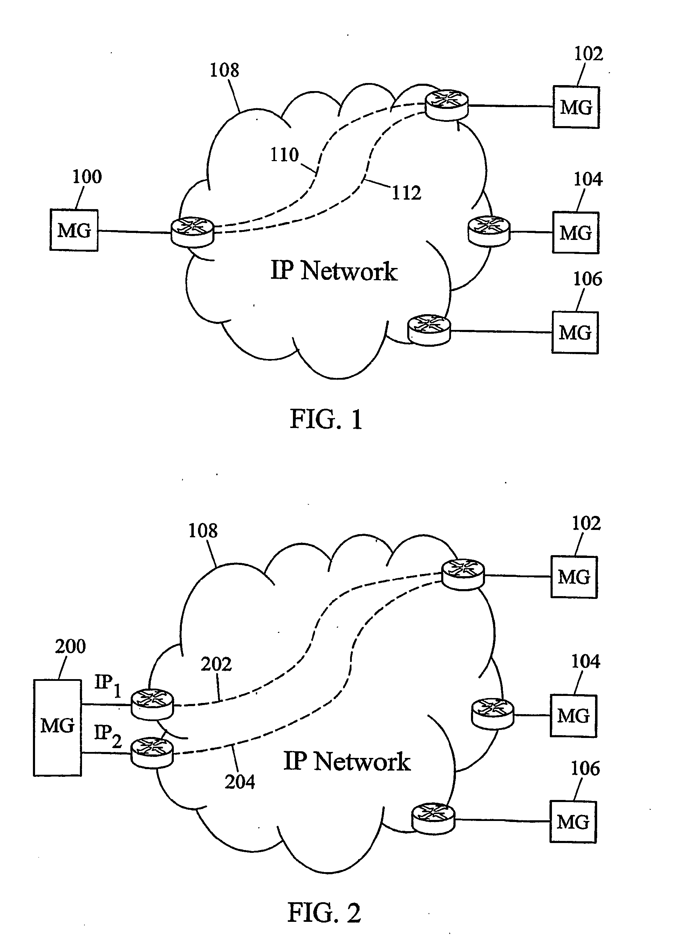

Figure 1 is a schematic diagram illustrating a plurality of media gateways **100, 102, 104,** and **106** interconnected through an IP network **108.** In this example, each media gateway **100, 102, 104,** and **106** is connected to IP network **108** through one network interface. Calls can be set up between media gateways **100, 102, 104,** and **106.** For example, a call between media gateways **100** and **102** can follow path **110.** When the capacity of path **110** is exceeded, calls will be rejected. This is because traffic is forwarded on a per packet basis with a destination-based routing scheme, where each node determines outgoing traffic based on the IP destination address. Calls can be rejected due to insufficient bandwidth resources on path **110,** even though another path, such as path **112,** is available to carry traffic between media gateways **100** and **102.** Thus, the IP forwarding scheme used by conventional media gateways can result in a low utilization of network resources. Further, if a network event occurs that makes media gateway **102** unreachable from media gateway **100,** media gateway **100** is not informed and may continue to transmit voice traffic to media gateway **102.** This is because conventional media gateways only act as IP hosts without knowledge of the current network status. Summarily, media gateway **100** serves as an IP host and has neither traffic engineering support nor network-awareness capability. Although carriers are trying to handle these issues by employing more sophisticated technologies, such as Multi Protocol Label Switching (MPLS), on top of IP networks, these technologies can further complicate the network system in terms of networks operations and maintenance.

Figure 2 is a schematic diagram illustrating a plurality of media gateways interconnected through an IP network **108.** In this example, media gateway **200** includes a plurality of interfaces and communicates with single-interface media gateway **102** via paths **202** and **204.** Media gateway **200** may behave as a multi-homing IP host with different IP addresses associated with each of its interfaces **IP1** and **IP2.** If calls between media gateways **200** and **102** are distributed on paths **202** and **204,** calls allocated on path **202** carry a local IP address **IP₁,** while calls allocated on path **204** carry local IP address **IP₂.** If path **202** becomes unreachable, media gateway **200** is not capable of re-allocating existing calls from path **202** to path **204** because the local IP addresses are different on the two paths. Thus, network resilience is not achieved.

Accordingly, in light of the difficulties associated with IP telephony and, in particular, with media gateways, there exists a need for improved IP telephony systems, media gateways, and related processes.

### Disclosure of the Invention

According to one aspect, the present invention includes methods and systems for providing VoIP traffic engineering and path resilience using a network-aware media gateway in which voice over IP hosts appear on multiple interfaces of the network-aware media gateway. In one exemplary media gateway, voice over IP hosts have their own internal IP addresses. The voice over IP hosts are each connected to a plurality of the network interfaces associated with the media gateway. Internal routers associated with each interface in the media gateway advertise reachability information to the voice over IP hosts via the multiple interfaces and participate in routing protocols to build network topology and cost information. The multi-appearance capability of such a media gateway allows external routers to choose different paths to the voice over IP hosts, for both traffic engineering and resilience purposes. The participation in routing protocols enables the media gateway to switch outgoing media sessions from one path to another to the other to provide end-to-end network resilience.

Accordingly, it is an object of the invention to provide a network-aware media gateway that provides end-to-end media session path resilience.

It is another object of the invention to provide a multi-appearance, network-aware media gateway that allows voice over IP hosts to be reached via multiple interfaces and that advertises this reachability information to routers in the network.

Some of the objects of the invention having been stated hereinabove, and which are addressed in whole or in part by the present invention, other objects will become evident as the description proceeds when taken in connection with the accompanying drawings as best described hereinbelow.

### Brief Description of the Drawings

Exemplary embodiments of the present invention will now be explained with reference to the accompanying drawings, of which:
Figure 1 is a network diagram illustrating a conventional voice over IP network with a single-interface media gateway and no path resilience;
Figure 2 is a network diagram illustrating a conventional voice over IP network with a dual-interface media gateway and no path resilience;
Figure 3 is a block diagram illustrating a voice over IP network including a network-aware media gateway according to an embodiment of the present invention;
Figures 4A and 4B are a flow chart that illustrates exemplary steps that may be performed in providing voice over IP traffic engineering and path resilience using a network-aware media gateway according to an embodiment of the present invention;
Figure 5 is a flow chart illustrating an exemplary destination-fixed voice over IP path selection algorithm according to an embodiment of the present invention;
Figure 6 is a network diagram illustrating exemplary voice over IP paths selected using the destination fixed voice over IP path selection algorithm according to an embodiment of the present invention;
Figure 7 is a flow chart illustrating an exemplary matrix walk voice over IP path selection algorithm according to an embodiment of the present invention;
Figure 8 is a network diagram illustrating exemplary voice over IP paths selected using,the matrix walk voice over IP selection algorithm according to an embodiment of the present invention;
Figure 9 is a flow chart illustrating an exemplary paired voice over IP path selection algorithm according to an embodiment of the present invention;
Figure 10 is a network diagram illustrating exemplary voice over IP paths selected using the paired voice over IP path selection algorithm according to an embodiment of the present invention;
Figure 11 is a flow chart illustrating an exemplary session assignment algorithm that may be performed by a softswitch in assigning a voice over IP session to a voice over IP path according to an embodiment of the present invention;
Figure 12 is a flow chart illustrating an exemplary voice over IP session assignment algorithm that may be executed by a voice over IP traffic engineering server in assigning a voice over IP session to a voice over IP path according to an embodiment of the present invention; and
Figure 13 is a flow chart illustrating exemplary steps that may be performed by a media gateway in assigning a voice over IP session to a voice over IP path according to an embodiment of the present invention.

### Detailed Description of the Invention

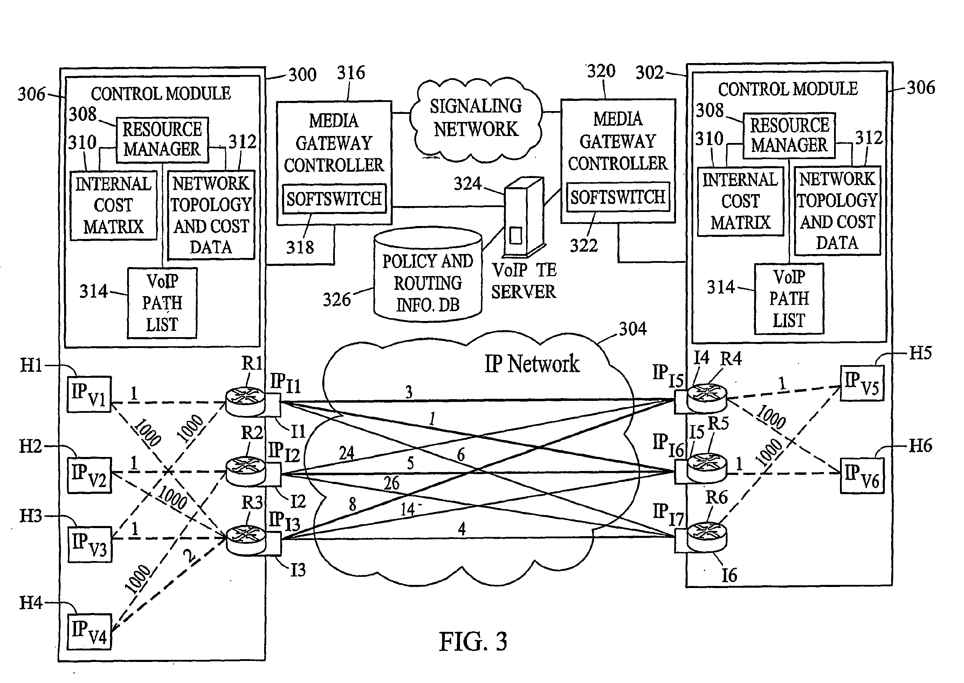

Methods, systems, and computer programs products are disclosed herein for providing VoIP traffic engineering and path resilience using a network-aware media gateway. Figure 3 is a schematic diagram illustrating exemplary network-aware media gateways **300** and **302** according to an embodiment of the present invention. Referring to Figure 3, media gateways **300** and **302** are connected via an IP network **304** including multiple voice over IP paths with costs assigned by the network. Media gateways **300** and **302** are both preferably network-aware by participating in network routing protocols. Alternatively, media gateway **302** may be a non-network-aware media gateway.

In the illustrated example, media gateway **300** includes voice over IP hosts **H1-H4,** a plurality of network interfaces **11-13,** per interface routers **R1-R3** associated with each interface, a control module **306**, a resource ma nager **308,** an internal cost matrix **310,** network topology and cost data **312,** and a voice over IP path list **314.** Media gateway **302** likewise includes interfaces **I5-I7,** per interface routers **R4-R6,** voice over IP hosts **H5** and **H6,** and a control module with components **308, 310, 312,** and **314.** In Figure 3, the components of media gateway **302** are assumed to be similar in function to the corresponding components of media gateway **300.** Hence, for simplicity of illustration, the components and operation of media gateway **302** will not be provided herein.

Each voice over IP host **H1-H4** contains voice processing resources for processing voice over IP and TDM voice streams. For example, each voice over IP host may include codecs, voice over IP, ATM, and TDM chips, and digital signal processing resources for processing voice over IP streams. A detailed description of exemplary resources that may be found in voice over IP hosts **H1-H4** are described in commonly assigned, co-pending U.S. patent application no. 10/676,233, the disclosure of which is incorporated herein by reference in its entirety.

According to an important aspect of the invention, voice over IP hosts **H1-H4** are each assigned individual IP addresses **IP_{V1}-IP_{V4}.** These individual IP addresses are each reachable through multiple IP interfaces. In order to make nodes in the network aware of the multi-reachability over the voice over IP hosts, per interface routers **R1-R3** advertise reachability information and associated costs information to each voice over IP host IP address to routers in IP network **300.** Because of the multi-interface visibility of voice over IP hosts **H1-H4,** routers in IP network **304** can dynamically select different paths to a particular voice over IP host if a single path fails. In addition, as will be described in detail below, the owner or operator of media gateway **300** may implement traffic engineering by assigning costs to internal associations between hosts **H1-H4** and routers **R1-R3** to engineer voice traffic over different network paths.

In addition to advertising reachability information to voice over IP hosts **H1-H4,** per interface internal routers **R1-R3** preferably also collect link state information from IP network **304** and maintain per interface routing tables, which are used in generating a voice over IP path lists to voice over IP destinations. Voice over IP sessions are assigned to the paths in the path lists, which are dynamically updated based on the per interface routing information. As a result of the dynamic path updating, if one path to the remote end of a voice over IP session fails, because routers **R1-R3** are dynamically updated by the routing protocols, the voice over IP session can be dynamically switched over an alternate path.

Control module **306** in media gateway **300** controls the overall operation of media gateway 300 and communicates with media gateway controller **316** to set up and tear down calls. Resource manager **308** of control module **306** allocates new voice over IP sessions to incoming calls, builds network topology and cost data **312** based on routing protocol information received by per interface routers **R1-R3,** and assigns VoIP sessions to VoIP paths stored in VoIP path list **314.**

Resource manager **308** may assign a voice over IP session to one of the hosts **H1-H4.** Resource manager **308** use hosts **H1-H4** dynamically as a shared resource. Resource manager **308** may then populate voice over IP session tables that are maintained by each per interface router **R1-R3.**

Internal cost matrix **310** contains internal costs associated with associations between voice over IP hosts **H1-H4** and per interface internal routers **R1-R3.** The data stored in internal cost matrix **310** may be statically provisioned by a network operator. Examples of data that may be stored in internal cost matrix **310** will be described in detail below.

Media gateway controller **316** may include an internal softswitch **318** for controlling the operations of media gateway **300.** Similarly, media gateway controller **320** may include an internal softswitch **322** for setting up and tearing down sessions in media gateway **300.** As discussed above, communications between media gateways and their associated media gateway controllers may occur via a standard media gateway control protocol, such as MGCP or MEGACO. A voice over IP traffic engineering server **324** may perform traffic engineering functions based on policy and routing information stored in policy and routing information database **326.** Exemplary traffic engineering fu notions that may be provided by voice over IP traffic engineering server **324** will be described in detail below.

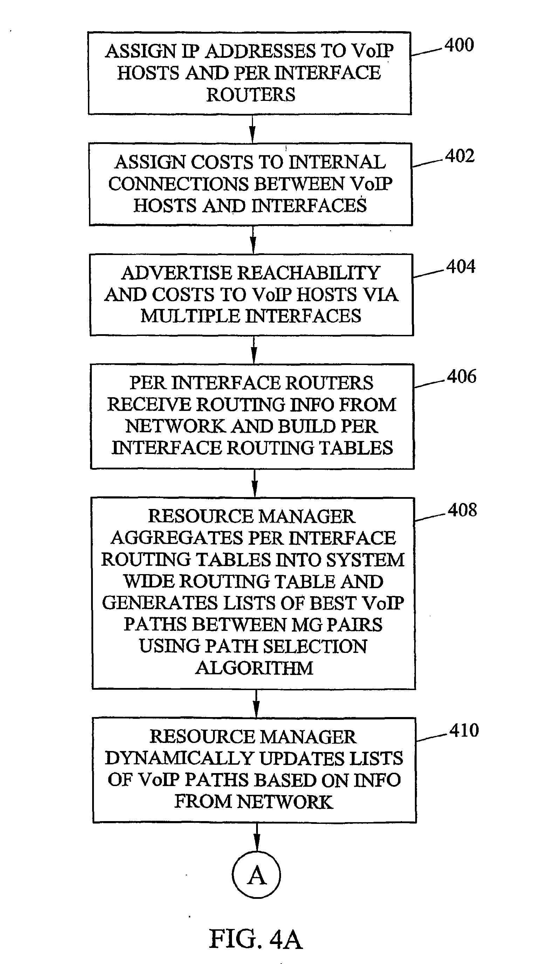

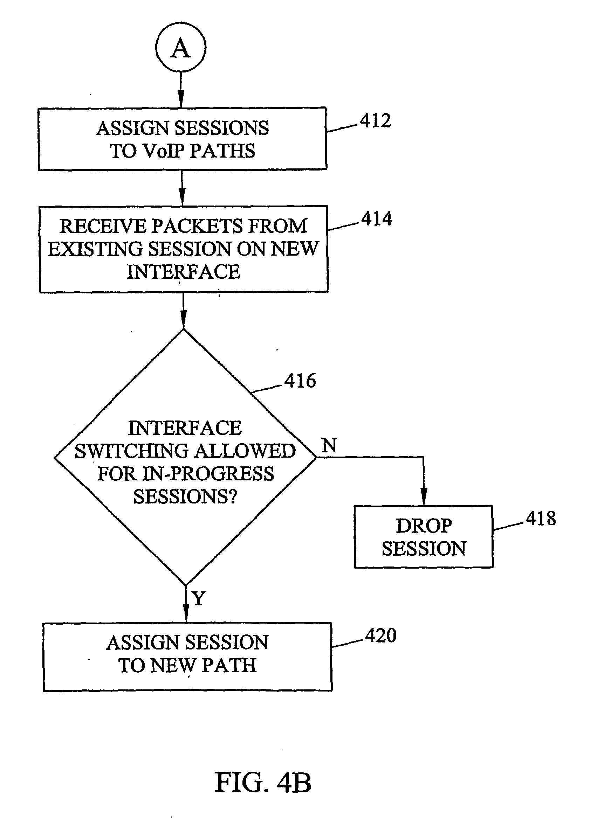

Figures 4A and 4B are a flow chart illustrating an exemplary overall steps for in providing VoIP traffic engineering and path resilience using a network-aware media gateway according to an embodiment of the present invention. Referring to Figure 4A, in step **400** a media gateway operator assigns separate IP addresses to voice over IP hosts and per interface routers in the media gateway. In step **402,** the media gateway operator assigns costs to internal connections between the voice over IP hosts and the interfaces associated with each per interface router. The costs may be assigned for traffic engineering purposes, such as load sharing, or for providing path redundancy.

In step **404,** media gateway **300** advertises reachability and costs of internal paths voice over IP hosts via the multiple interfaces. Using OS PF as an example, this step may be performed by sending Open Shortest Path First (OSPF) link state messages to network routers. The costs associated with internal network connections may be set by the media gateway operator to be compatible with the costs assigned by routers in the network to external connections so that network routers can include the internal link costs in their route cost computations. In one implementation, internal costs can be set to be equal to network route costs so that changes in internal route costs will have the same effect on end-to-end routes as changes in external route costs. In an alternate implementation, internal link costs may be set much greater than network route costs, i.e., at least one order of magnitude greater than network route costs, so that changes in network routes will not affect internal routes. In yet another alternate implementation, internal route costs may be set much less than, i.e., at least one order of magnitude less than, network route costs so that internal costs will have no effect on influencing routing in the network.

In step **406,** the per interface routers receive routing information from the network and build per interface routing tables. Building per interface routing tables in a media gateway enables the media gateway to dynamically respond to changing conditions in the network.

In step **408,** resource manager **308** aggregates the per interface routing tables into a system wide routing table and generates a list of the best voice over IP paths between media gateway pairs using a path selection algorithm. This step assumes that the media gateway may or may not be provisioned with knowledge of IP addresses of voice over IP hosts in peer media gateways. The list of voice over IP paths can be computed with each known media gateway destination based on the routing information received in step **406.** Exemplary path selection algorithms will be described in detail below.

In step **410,** resource manager **308** dynamically updates the list of voice over IP paths based on routing information received from the network. This step may include deleting paths that become unavailable and replacing high cost paths with lower cost paths. Referring to Figure 4B, in step **412,** resource manager **308** assigns sessions to voice over IP paths. This step may include selecting a path from one of the pre-computed path lists.

In step **414,** if one path in a network fails or experiences a change in cost relative to other paths, packets may arrive on a different interface of media gateway **300** from the interface associated with the path to which a session was originally assigned. If this occurs, media gateway **300** may be configurable by the operator to allow packets from an existing session on a new interface or not to allow interface switching. One reason to allow interface switching is to provide end-to-end redundancy. One reason that it may not be desirable to allow interface switching is to individually control bandwidth allocated to each interface. Accordingly, in step **416,** the media gateway determines whether interface switching is allowed for in-progress sessions. If interface switching is not allowed, control processed to step **418** where the session is dropped. If interface switching is allowed, control proceeds to step **420** where the session is assigned to a new path.

Thus, using the steps illustrated in Figures 4A and 4B, network-wide path resilience and traffic engineering can be achieved using a network-aware media and path cost assignment gateway.

### Participation in Network Routing Protocols and Path Cost Computation

As stated above, based on costs assigned to each interface and costs associated with all available Void paths to media gateway **302,** media gateway **300** may compute total costs for delivering Void traffic from IP hosts **H1-H4** to IP hosts **H5-H6.** Resource manager **308** can determine the costs of the paths to MG **302** utilizing costs received via a routing protocol, such as the OSPF routing protocol. Per interface routers **R1-R3** can participate in routing information exchange with IP network **300** and appear as a router to IP network **300.** Per interface routers **R1-R3** may receive and process routing updates and determine reachability and routing costs to remote IP addresses independently. As indicated in Figure 4, resource manager **308** preferably combines per interface routing tables with internal cost matrix to calculate a system-wide routing table that represents shortest paths from each voice over IP host to each destination.

In order to be network-aware, each per interface routers **R1-R3** may include an OSPF protocol stack for OSPF link state announcement message exchange and OSPF computation. The protocol stack may maintain a link state database based on received OSPF messages from adjacent routers in IP network **304.** The link state database may include information regarding network topology and link metrics. From this network topology and link metric information, each per interface router **R1-R3** generates a per interface routing table containing routes to remote voice over IP hosts with cost associated with each route. For example, as illustrated in Figure 3, voice over IP path 1-5 from voice over IP host **H1** to voice over IP host **H5** may be assigned a total cost of five because the internal cost in media gateways **300** and **302** are each one and the network cost is three.

The present invention is not limited to using a link state routing exchange protocol, such as OSPF to may maintain network-awareness. In an alternate embodiment, media gateway **300** may implement a distance vector routing protocol, such as routing information protocol (RIP), without departing from the scope of the invention. Any suitable routing protocol that provides knowledge of current network conditions and topology may be used. By participating in network routing protocols, media **gateway 300** maintains a real time view of paths to media gateway **302** and IP network **304** dynamically adjusts routes to voice over IP hosts **H1-H4.**

In order to avoid unnecessary processing, media gateway **300** may implement a modified version of routing protocol. Using OSPF as an example, conventional OSPF routers receive link state announcements (LSAs) on a given input port forward the link state announcements over all output ports. According to the version of OSPF that may be implemented by media gateway 300, only link state information associated with internal routes is advertised to other nodes. LSAs regarding external destinations are preferably not flooded to output ports of media gateway **300.** In addition, media gateway **300** preferably only processes LSAs that relate to routes to remote voice over IP hosts and ignores LSAs relating to other routes, such as data routes. Finally, per interface routers **R1-R3** preferably implement separate OSPF stacks and do not share routing information with each other. As a result of these modifications of the standard routing protocol, the processing load on media gateway **300** caused by implementation of the routing protocol is reduced.

In the version of OSPF implemented by media gateway 300, the IP addresses of IP hosts **H1-H4** may be stored in an OSPF host table maintained for each interface. The host table for each interface may include IP addresses and costs for voice over IP hosts reachable through each interface. Per-interface routers **R1-R3** can send advertisements of the IP addresses reachable through the interface along with the assigned cost. Outgoing OSPF messages may also include a router ID for each interface such that routers in network **304** will view each interface on media gateway **300** as an OSPF router and has reachability to a set of IP addresses.

Incoming traffic-distribution through interfaces **I1-I3** can be controlled by varying the assigned costs to links within media gateway **300.** Decreasing the cost associated with one of the internal links increases the chance for distribution of traffic to the interface associated with the link. Conversely, increasing the cost of a link may cause distributing traffic to the interfaces that are not associated with the link.

Costs can be assigned to internal links such that each IP host has a primary interface and a number of secondary interfaces. The primary interface is assigned a lower cost than the secondary interfaces. For example, referring to Figure 3, the primary interface of IP host **H1** is interface **11** with cost 1. The secondary interface of IP host **H1** is interface **13** with cost 1000. Therefore, typically, incoming and outgoing traffic for each host is routed to the primary interface. Traffic can be re-routed to the secondary interface when network failure occurs.

As stated above, the cost assigned to internal associations between interfaces **I1-13** and voice over IP host **H1-H4** may be assigned by the media gateway operator and stored in internal cost matrix **310.** Table 1 shown below illustrates an exemplary internal cost matrix for media gateway 300 shown in Figure 3.

**Table 1: Internal Link Cost Matrix for Media Gateway 300 of Figure 3**

| | **Interface I1** | **Interface I2** | **Interface I3** |
|---|---|---|---|
| **Host H1** | 1 | ∞ | 1000 |
| **Host H2** | ∞ | 1 | 1000 |
| **Host H3** | 1000 | ∞ | 1 |
| **Host H4** | ∞ | 1000 | 2 |

In Table 1, each cell represents the cost of an internal link. For example, the internal cost between interface **11** and host **H1** is shown to be 1. The internal cost from interface **12** to host **H1** is shown as infinity, because host **H1** is not reachable via interface **12** in the exemplary configuration illustrated in Figure 3. The internal cost of the link between interface **13** and host **H1** is shown to be 1000, since this link is intended to be a backup link that will only be used if interface I**1** fails. Thus, by appropriately provisioning values in cost matrix **310,** the media gateway operator can engineer traffic over a specified link.

### VoIP Path Selection

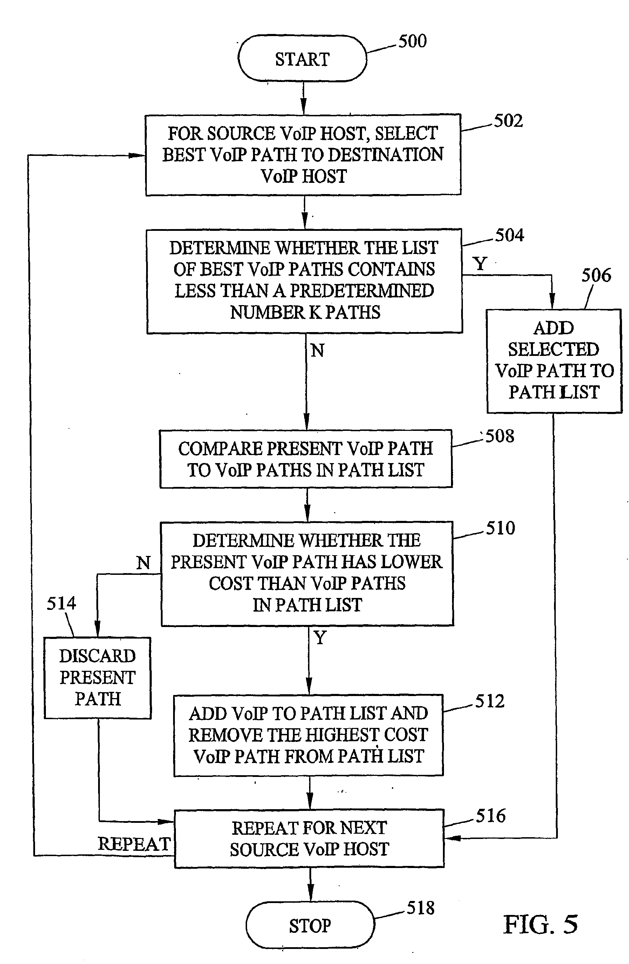

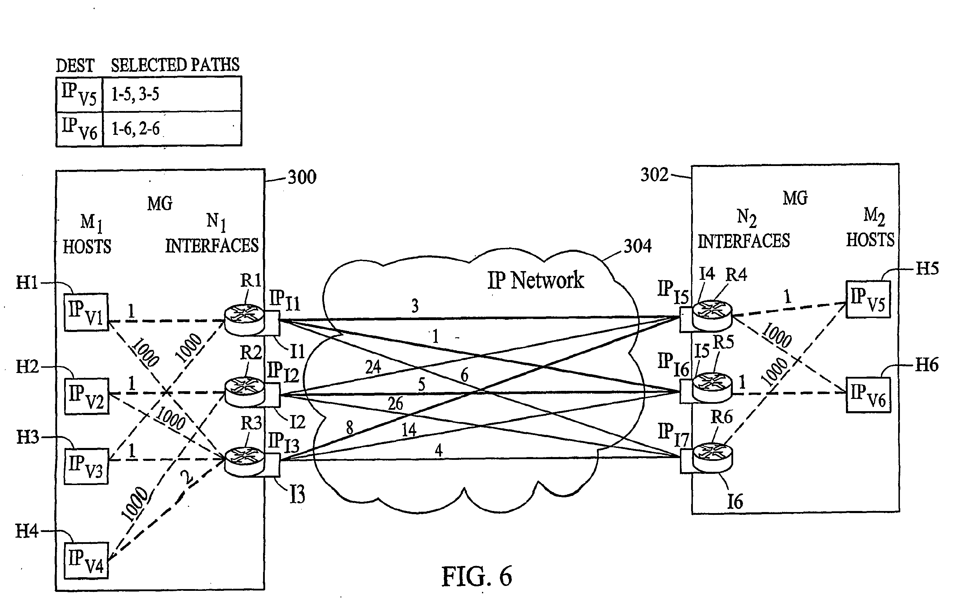

The process of selecting a set of best voice over IP paths between voice over IP destinations is referred to herein as voice over IP path selection. Exemplary voice over IP path selection methods that may be used herein include a destination-fixed method, a matrix walk method, and a paired selection method. The destination-fixed path selection algorithm may be used when the destination voice over IP host is fixed, and it is desirable to find the lowest cost path from a plurality of source voice over IP addresses to the fixed destination voice over IP address. Figure 5 is a flow chart illustrating exemplary steps that may be performed by media gateway **300** in a destination-fixed selection process for VoIP path selection. Figure 6 is a network diagram illustrating exemplary paths that may be selected using the destination-fixed path selection algorithm of Figure 5.

Referring to Figure 5, the destination-fixed path selection algorithm starts in step **500.** In step **502,** for each source voice over IP host, media gateway **300** selects the best voice over IP path via different local interfaces to a destination voice over IP host. In the example illustrated in Figure 6, the first source voice over IP host is IP host **H1.** For destination voice over IP host **H5,** the lowest-cost path from voice over IP host **H1** is via interface **I1** and interface **I5.** This path is illustrated in Figure 6 as path 1-5, with a total cost of 5. Returning to Figure 5, in step **504,** media gateway **300** determines whether the list of best voice over IP paths contains less than a predetermined number K paths. The number K is preferably set to at least two paths to provide path redundancy and is preferably set to no more than the number of interfaces on the source media gateway.

If the list of best voice over IP paths contains less than K paths, control proceeds to step **506** where the selected path is added to the list of best voice over IP paths. Since the list is initially empty, the first path will be added to the list. If the list of best voice over IP paths is not less than the predetermined number K, control proceeds to step **508** where the present voice over IP path is compared to the voice over IP paths currently in the list. In step **510,** if the present path has a lower cost than the voice over IP paths in the list, control proceeds to step **512** where the voice over IP path is added to the list and the highest cost path is removed from the list. If, in step **510,** the present path does not have a lower cost than the remaining paths in the list, control proceeds to step **514** where the present path is discarded.

After the present path is discarded, control proceeds to step **516** where the process is repeated for the next source voice over IP address. Similarly, in step **506,** if the present path has been added to the list, control proceeds to step **516** where the process is repeated for the next source voice over IP host. Steps **502-516** may be repeated until all source voice over IP hosts have been tested. The result of executing the destination-fixed algorithm illustrated in Figure 5 is an ordered list of K lowest cost voice over IP paths from a given source media gateway to a destination voice over IP host. If the destination media gateway includes multiple voice over IP hosts, the process may be repeated to determine the lowest cost paths to each destination voice over IP host.

Figure 6 illustrates the result of executing the destination-fixed algorithm in Figure 5 for voice over IP hosts IP_{V5} and IP_{V6} in media gateway **300.** In Figure 6, the paths are identified by source and destination voice over IP hosts. For example, path 1-5 in Figure 6 refers to the path from IP host **H1** to IP host **H5** via their primary interfaces. Similarly, path 3-5 refers to the lowest cost voice over IP path from IP host **H3** to IP host **H5.** The lowest cost paths are indicated by the bold lines in IP network **304.** It can be seen from the example in Figure 6 that the result of executing the destination fixed algorithm twice, once for each voice over IP host, yields the K lowest cost paths to each destination voice over IP host.

As indicated above, the destination-fixed path selection algorithm may be used when the destination voice over IP host is fixed and it is desirable to select a set of voice over IP paths to that destination. In other instance, a media gateway may be free to select both source and destination voice over IP hosts between two media gateways. If both source and destination voice over IP hosts are to be selected in generating a path list, media gateway 300 may utilize a matrix-walk path selection process for VoIP path selection. This process can be utilized for selecting a VoIP path when both a destination and a source VoIP host needs to be selected. Additionally, the process can be utilized to update a VoIP path list for a particular destination media gateway (such as media gateway **302).** The VoIP path list can include VoIP paths connecting a set of M₁ IP hosts of media gateway **300** with a set of M₂ IP hosts of media gateway **302.** Media gateways **300** and **302** are assumed to have N₁ and N₂ interfaces, respectively.

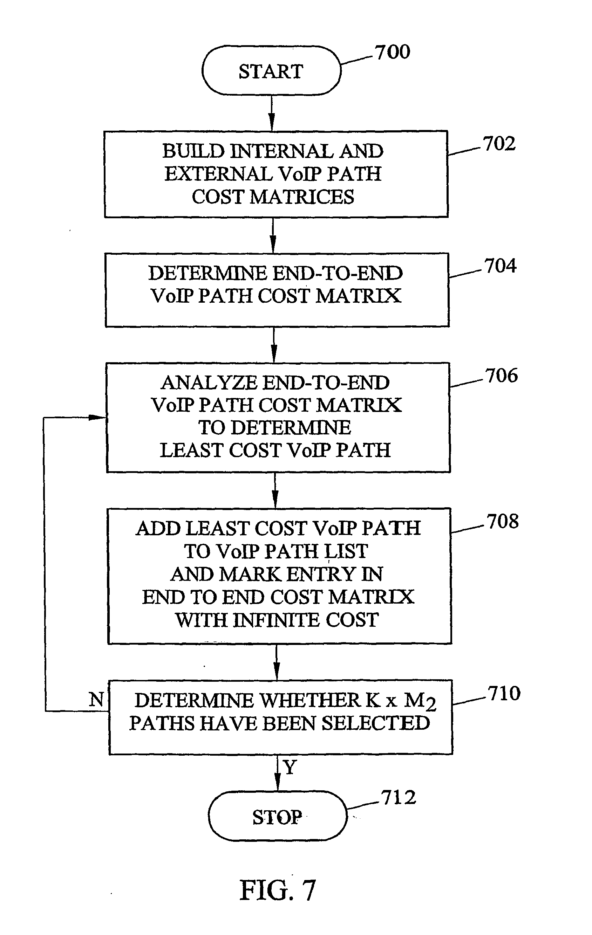

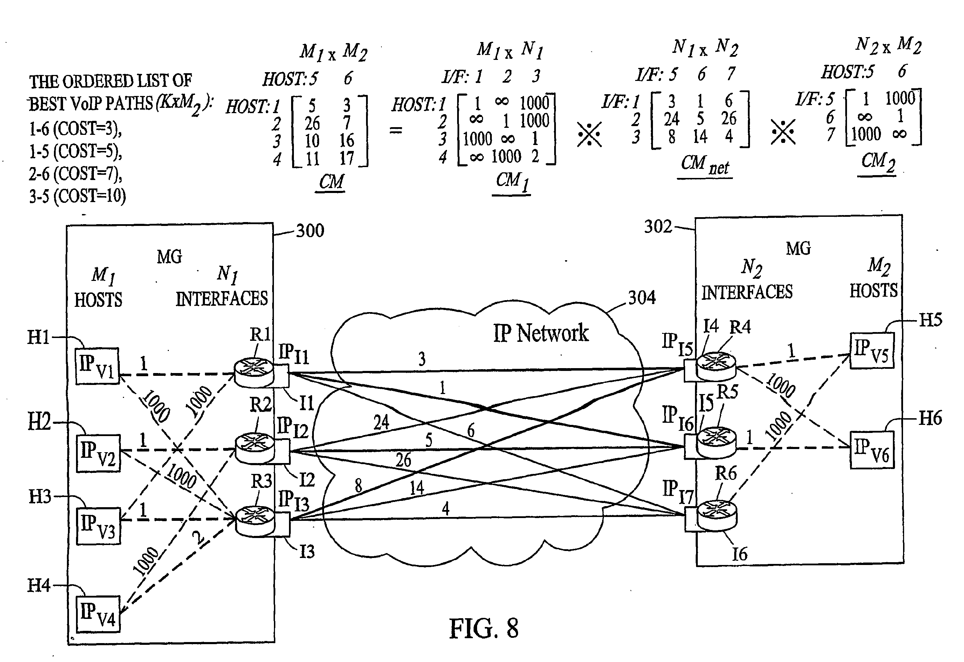

Figure 7 is a flow chart illustrating exemplary steps that may be performed by media gateway **300** in a matrix-walk path selection process for VoIP path selection. Figure 8 is a network and matrix diagram illustrating exemplary VoIP cost matrices for the VoIP path selection algorithm of Figure 7. Referring to Figure 7, the process can start at step **700**. Next, in step **702**, cost matrices can be built corresponding to the costs between the set of M₁ IP hosts and the set of N₁ interfaces (C_{M1} = M₁ x N₁); the costs between the set N₁ and N₂ of interfaces (Cₙₑₜ = N₁ x N₂); and the costs between the set of N₂ interfaces and the set of M₂ IP hosts (C_{M2} = M₂ x N₂).

An end-to-end VoIP path cost matrix can be determined (step **704).** The end-to-end VoIP path cost matrix can equal C₁ 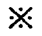 X Cₙₑₜ 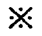 X C₂. The symbol " 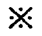 " represents a minimum-cost concatenation operator applied to matrix operations C(MxL) = A(MxN) 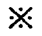 B(NxL), where n = 1...N, m = 1...M, and I = 1...L. Each element in the matrix C is identified by cₘₗ, where = min{aₘₙ + bₙₗ} among all n, for a given m and I. Exemplary matrices CM₁, CM₂, CMₙₑₜ and CM are illustrated in Figure 6.

Returning to Figure 7, in step **706,** media gateway **300** analyzes each element of the end-to-end VoIP path cost matrix CM to determine the least cost VoIP path. The least cost VoIP path is added to the ordered list of best VoIP paths and the corresponding entry in matrix CM is marked with an infinity cost to prevent this path from being re-selected (step **708).** If K x M₂ paths have not been selected, control returns to step **706** and steps **706** and **708** are repeated to add the next lowest-cost VotP path to the path list. In step **710,** if K x M₂ paths have been selected, control proceeds to step **712** where the process ends. The result of the process a list of K x M₂ VoIP lowest cost paths from media gateway **MG1** to **MG2.**

In yet another alternate embodiment, media gateway **300** may utilize a paired selection process for VoIP path selection. The VoIP path list can include VoIP paths connecting a set of M₁ IP hosts of media gateway **300** with a set of M₂ IP hosts of media gateway **302.** The set of M₁ IP hosts form a set V₁. The set of M₂ IP hosts forms a set V₂. Media gateways **300** and **302** are assumed to have N₁ and N₂ interfaces, respectively.

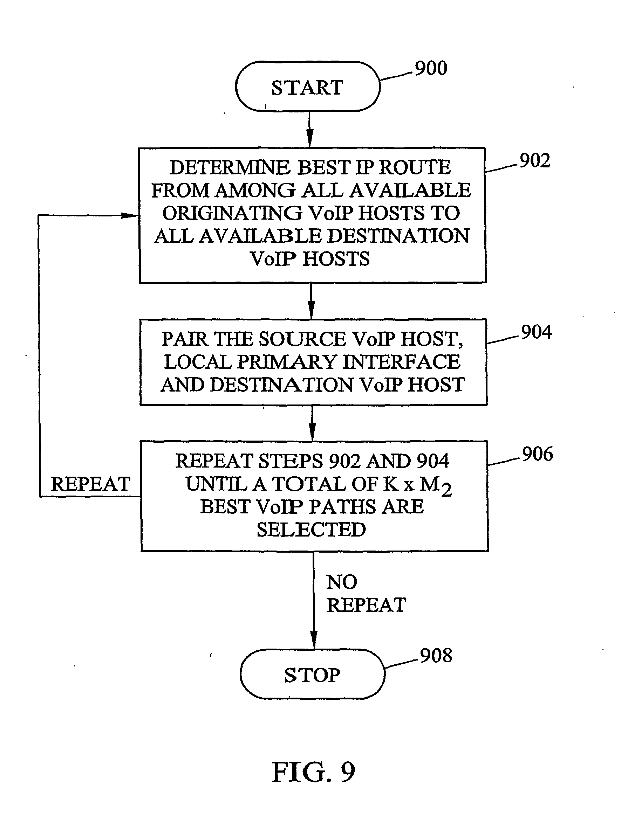

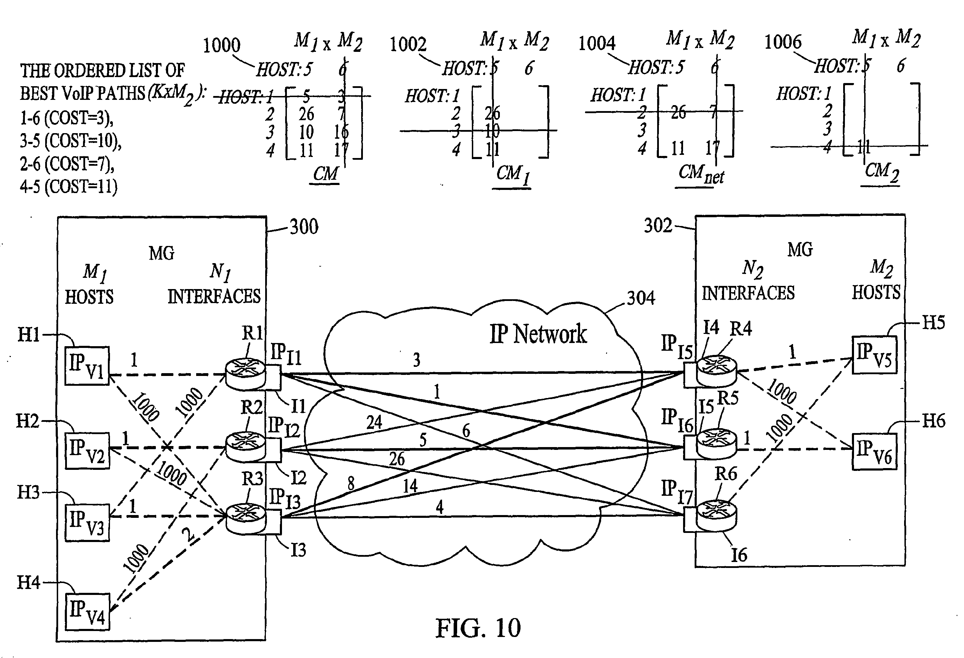

Figure 9 is a flow chart illustrating exemplary steps that may be performed by media gateway **300** in a paired-selection process for VoIP path selection. Figure 10 is a network diagram illustrating exemplary cost matrices that may be used in the paired selection algorithm of Figure 9. Referring to Figure 9, the process can start at step **900.** Next, in step **902,** media gateway **300** can determine the best IP route from among all available source IP hosts in set V₁ (via all available primary interfaces in set I₁) to all available destination IP hosts in set V₂ at a destination media gateway (such as media gateway **302** shown in Figure 4). Next, in step **904,** the corresponding source IP host, the corresponding local primary interface, and destination IP host are paired and removed from sets, V₁, I₁, and V₂, respectively, of the best route selected in **904.**

Steps **902** and **904** can be repeated until a total of K x M₂ best VoIP paths are selected (step **906).** Next, the process can stop at step **908.** The result of the process is that the selected K x M₂ best IP routes are the VoIP paths from media gateway **300** to all destination IP hosts at media gateway **302.**

Figure 10 illustrates the results of applying steps **902** and **904** to the media gateway configuration illustrated in Figure 3. Referring to Figure 10, the lowest cost path between any two voice over IP hosts of media gateways 300 and **302** is the path between host 1 and host 6, with a cost of 3. Accordingly, the path 1-6 is added to the ordered list of best voice over IP paths, and the corresponding source and destination voice over IP hosts are removed from the M₁ x M₂ cost matrix **1000.** The removal of all entries having host 1 or host 6 is indicated by the intersecting horizontal and vertical lines in matrix **1000.** Cost matrix **1002** illustrates the results of removing host 1-6 from the cost matrix. Since 3-5 is the lowest cost path remaining in the cost matrix, all entries having host 3 or host 5 are removed from the cost matrix, and 3-5 is added to the order list of voice over IP paths. In matrix **1004,** since all of the hosts in media gateway **302** were removed in the first two steps, entries for hosts from media gateway **302** that were removed in previous steps but not selected for the path list are added back to the cost matrix. Matrix **1004** illustrates the result of adding the remaining entries from media gateway **302** to the cost matrix and selecting the entry corresponding to path 2-6 as the next lowest cost path. When this occurs, path 2-6 is added to the cost matrix and the corresponding source and destination voice over IP hosts are removed from the cost matrix. Matrix **1006** illustrates the entries remaining in the cost matrix after removing IP hosts 2 and 6. The remaining lowest cost path is 4-5, indicating that path 4-5 is the next lowest cost path. This path is then added to the path list. In this example K is assumed to 2 and media gateway **302** has M₂=2 hosts. Thus, after path 4-5 has been selected in matrix **1006,** K x M₂=4 paths have been selected, and the paired path selection algorithm ends. Thus, the result of performing the paired selection algorithm is an ordered list of K x M₂ voice over IP paths.

### Session Assignment

Once path selection has been performed, for every new VoIP session or call between media gateways, a VoIP path must be selected from the path list and assigned to the session. The session assignment can be determined at a softswitch, at a media gateway, or at a centralized VoIP Traffic Engineering server. Regardless of which entity performs session assignment, session assignment may include selecting an available path from a list of available paths between source and destination IP addresses. Exemplary session assignment routines performed by a softswitch, a media gateway, and a traffic engineering server will now be described.

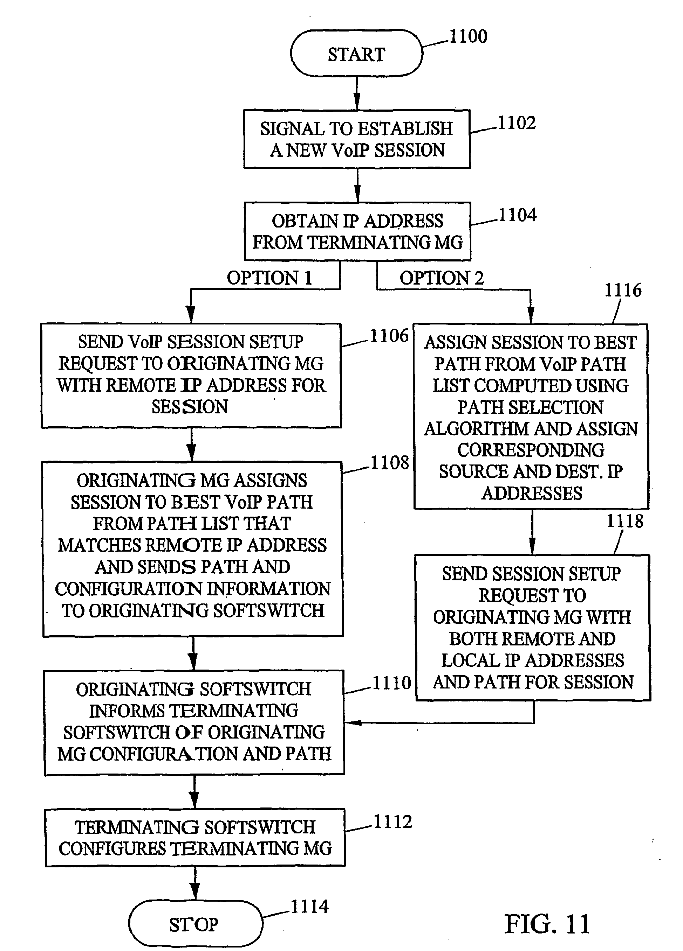

Figure 11 is a flow chart illustrating exemplary steps that may be performed by a softswitch (such as softswitch **318** shown in Figure 3) in VoIP session assignment according to an embodiment of the present invention. Referring to Figure 11, the process can start when a session request is received from a media gateway (step **1100).** In step **1102,** softswitch **318** may perform signaling for establishing a new VoIP session. In step **1104,** the originating softswitch obtains a VoIP session IP address from the terminating media gateway. In step **1104,** the next step is optional depending on the session assignment algorithm that is implemented by softswitch **318.** Two exemplary session assignment routines are indicated as option 1 and option 2 in Figure 11. If originating softswitch **318** implements option 1, control proceeds to step **1106** where originating softswitch **318** sends a voice over IP session setup request to an originating media gateway with the remote IP address assigned to the session. In step **1108,** the originating media gateway assigns the session to the best voice over IP path from the list of IP paths that matches the remote IP address and sends path and configuration information to the originating softswitch. In step **1110,** the originating softswitch informs the terminating softswitch of the originating media gateway configuration and path. In step **1112,** the terminating softswitch configures the terminating media gateway based on the received path and configuration information. The process ends in step **1114.**

Returning to step **1104,** if the softswitch implements session assignment option 2, control proceeds to step **1111** where the softswitch assigns the session to the best voice over IP path computed using the path selection algorithm. In other words, the softswitch performs the path selection algorithm and selects the best available voice over IP path for the session. In step **1118,** the originating softswitch sends a session setup message to the originating media gateway with both remote and local IP addresses and the path for the session. Control then returns to step **1110** and **1112** where the originating softswitch informs the terminating softswitch of the originating media gateway configuration and path, and the terminating softswitch configures the terminating media gateway.

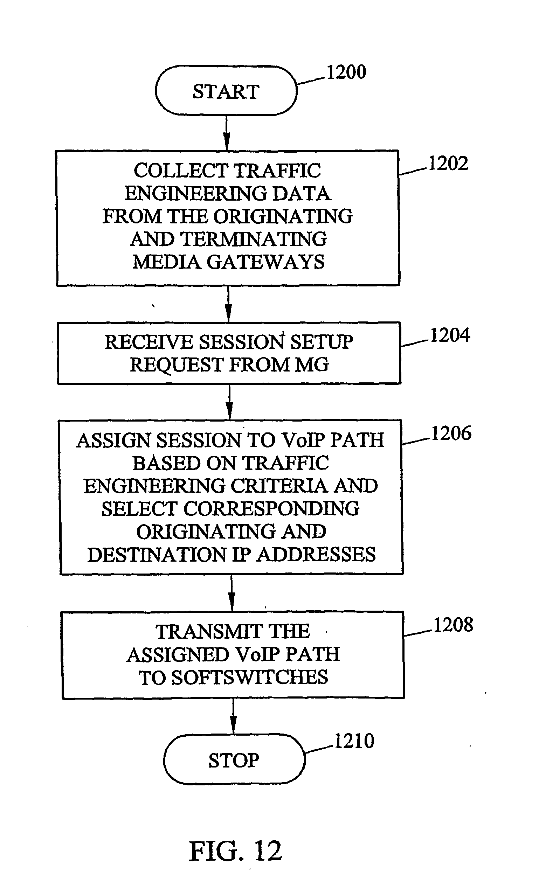

In an alternate implementation, rather than have a softswitch control session assignment, session assignment may be performed by a VoIP TE server, such as the server **324** illustrated in Figure 3. Server **324** may select a VoIP path when it has cost information regarding internal links of media gateways **300** and **302** and the paths of network **304.** Figure 12 is a flow chart illustrating exemplary steps that may be performed by a centralized VoIP TE server in performing VoIP session assignment according to an embodiment of the present invention. Referring to Figure 12, in step **1200,** the server-based session assignment algorithm begins. In step **1202,** the traffic engineering server collects traffic engineering data from originating and terminating media gateways. Traffic engineering data step **1202** may be performed continuously based on network routing information computed the media gateways and internal cost matrices of the media gateways. In step **1204,** traffic engineering server **324** receives a session setup request from a media gateway. In step **1206,** traffic engineering server **324** assigns the session to a VoIP path from a list of available voice over IP paths computed using one of the voice over IP path selection algorithms described above and selects source and destination IP addresses corresponding to the voice over IP path. The path may be assigned based on traffic engineering criteria, such as any of the cost-related criteria described above. In step **1208,** server **324** transmits the assigned voice over IP path to the source and destination softswitches. In step **1210,** the process ends.

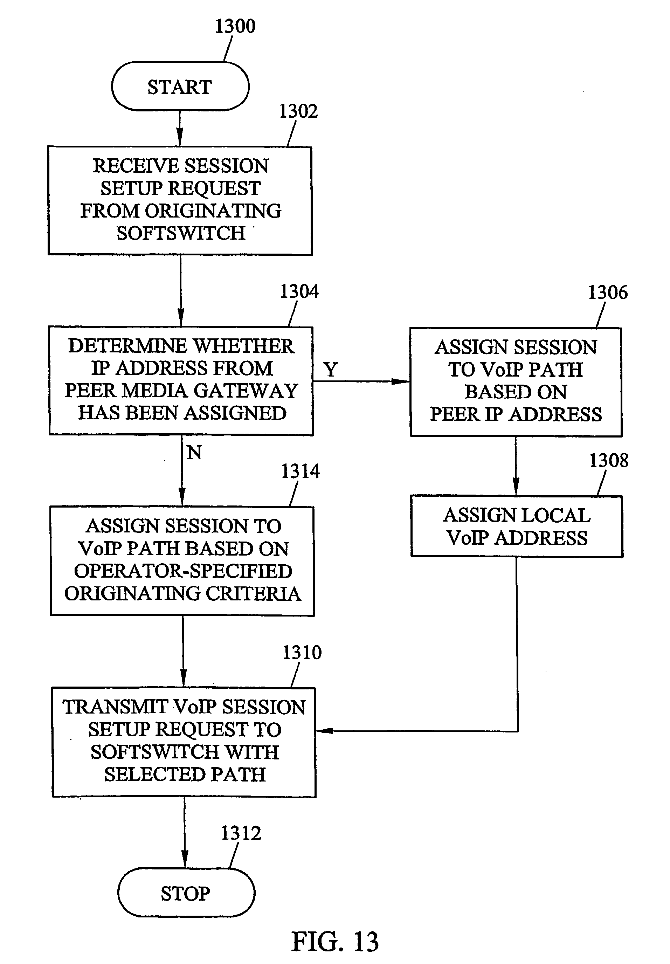

In yet another alternate implementation, voice over IP session assignment may ,be performed at a media gateway, such as media gateway **300** illustrated in Figure 3. Figure 13 is a flow chart that may be performed media gateway in Void IP session assignment according to an embodiment of the present invention. Referring to Figure 13, the media-gateway-based session assignment process begins in step **1300.** In step **1302,** the media gateway receives a session setup request from a softswitch. In step **1304,** the media gateway determines whether an IP address from the peer media gateway associated with the session has been assigned. If a remote IP address has been assigned, control proceeds to step **1306** where a session is assigned to the voice over IP path based on the peer IP address. This step may be performed by performing a lookup in the ordered list of paths computed using the path selection algorithm to determine the lowest cost path. In step **1308,** the media gateway assigns a local voice over IP address corresponding to the selected path. In step **1310,** the media gateway transmits a voice over IP session setup request to the originating softswitch including the selected path. The originating softswitch communicates this information to the terminating softswitch, which directs the terminating media gateway to setup a session along the selected path. The process ends at step **1312.**

Returning to step **1304,** if it is determined that a remote IP address has not been assigned, control proceeds to step **1314** where the media gateway assigns the session to a voice over IP path based on operator specified criteria. Operator specified criteria that may be used in session assignment may include a traffic distribution scheme such as ordered weight distribution, equal distribution, bandwidth utilization distribution, and measurement based distribution. Once the session has been assigned to a voice over IP path, control proceeds to step **1310** where the media gateway transmits a voice over IP session setup request to the originating media gateway with the selected path.

### Traffic Engineering and Real Time Traffic Monitoring

As stated above, sessions may be assigned to the ordered list of voice over IP paths based on traffic engineering considerations, such as load balancing, cost, delay, etc. In one exemplary implementation, sessions may be assigned to voice over IP paths based on real time monitoring of traffic on the voice over IP paths. In order to determine the state of a path in real time, a media gateway, such as media gateway **300** may use measurement mechanisms, such as a dedicated RTP/RTCP session in each path for delay monitoring. In an alternate implementation, a media gateway may use IP based delay measurement mechanisms, such as packet Internet groper (PING). In suitable mechanism for measuring the layer of congestion over a voice over IP path is intended to be within the scope of the invention.

Once the status of a voice over IP path has been determined, this status can be used in assigning voice over IP sessions using any of the session assignment algorithms described above. For example, the cost associated with each path may be updated based on dynamic condition changes in each path. The dynamically updated path costs can then be used to dynamically change the path list using one of the path selection algorithms described above. The dynamically updated path list may be used to assign paths to existing voice over IP sessions, new voice over IP sessions, or both.

In addition to changing the voice over IP path list based on dynamically changing traffic conditions, the path list may be updated based on provisioned conditions, such as policy changes, bandwidth price changes, etc. The media gateway operator may update the path cost matrix to reflect changes in these conditions. The updated cost matrix may be used to calculate a new voice over IP path list. The new voice over IP path list may be used to assign paths to existing voice over IP sessions, new voice over IP sessions, or both.

Thus, as described above, the present invention includes methods and systems for providing voice over IP traffic engineering and path resilience using a network-aware media gateway. A network-aware media gateway advertises reachability to multiple voice over IP hosts via multiple interfaces. As a result, the network develops multiple paths to each voice over IP host. In addition, the media gateway receives routing protocol information regarding remote voice over IP destinations and dynamically updates route cost information associated with each destination. Such dynamic updating of cost information enables the media gateway to respond in real time to changing network conditions.

It will be understood that various details of the invention may be changed without departing from the scope of the invention. Furthermore, the foregoing description is for the purpose of illustration only, and not for the purpose of limitation, as the invention is defined by the claims as set forth hereinafter.

## Claims

1. A method for providing a network-aware media gateway having voice over IP (VoIP) hosts, the method comprising: in a media gateway (300):
(a) providing a plurality of voice over IP hosts (H1~H4) containing media processing modules for processing media streams associated with media sessions between media gateways;
(b) assigning a first set of IP addresses (IP_{V1}∼IP_{V4}) to the voice over IP hosts;
**characterized in that**:
(c) providing a plurality of network interfaces (I1~I3) for connecting the voice over IP hosts to a network (304);
(d) assigning a second set of IP addresses (IPI₁~IP_{I3}) to the network interfaces, wherein addresses in the second set of IP addresses differ from addresses in the first set of IP addresses; and
(e) providing a plurality of per interface routers (R1∼R3) corresponding to the plurality of network interfaces, wherein the per interface routers advertise reachability information regarding at least one of the voice over IP hosts to the network via at least two of the interfaces and wherein the per interface routers receive network routing information from the network and generate per interface routing tables based on the network routing information.

2. The method of claim 1 comprising assigning costs to internal associations between the per-interface routers and voice over IP hosts reachable via the per interface routers.

3. The method of claim 2 wherein assigning costs to internal associations between the per-interface routers and voice over IP hosts reachable via the per interface routers includes assigning costs that are substantially equal to network route costs to remote voice over IP hosts.

4. The method of claim 2 wherein assigning costs to internal associations between the per-interface routers and voice over I P hosts reachable via the per interface routers includes assigning costs that are at least one order of magnitude greater than network route costs to remote voice over IP hosts.

5. The method of claim 2 wherein assigning costs to internal associations between the per-interface routers and voice over IP hosts reachable via the per interface routers includes assigning costs to the links that are at least one order of magnitude less than network route costs to remote voice over IP hosts.

6. The method of claim 1 comprising executing a path selection algorithm to determine a list of voice over IP paths (314) to a remote voice over IP host (H5, H6) based on the per interface routing tables.

7. The method of claim 6 wherein executing a path selection algorithm includes executing a destination-fixed path selection algorithm where lowest cost paths from each of the voice over IP hosts in the media gateway are selected to a fixed destination voice over IP host.

8. The method of claim 6 wherein executing a path selection algorithm includes executing a matrix-walk path selection algorithm including:
(a) computing an end-to-end cost matrix (312) indicating routing costs between the voice over IP hosts in the media gateway and voice over IP hosts in a destination media gateway (302); and
(b) selecting a predetermined number of lowest cost paths from the end-to-end cost matrix.

9. The method of claim 6 wherein executing a path selection algorithm includes executing a paired path selection algorithm including:
(a) computing an end-to-end cost matrix indicating total costs of routes between the voice over IP hosts in the media gateway and a plurality of destination voice over IP hosts in a destination media gateway;
(b) selecting a lowest cost path from the cost matrix and adding the lowest cost path to the path list;
(c) removing voice over IP hosts associated with the lowest cost path from the matrix; and
(d) repeating the lowest cost path selection and voice over IP host removal steps until a predetermined number of lowest cost paths are present in the path list.

10. The method of claim 6 comprising assigning voice over IP sessions to paths in the path list.

11. The method of claim 10 wherein assigning voice over IP sessions to the paths in the path list includes the assigning voice over IP sessions to the paths using traffic engineering criteria.

12. The method of claim 11 wherein assigning voice over IP sessions to the paths based on traffic engineering criteria includes assigning voice over IP sessions to the paths based on load balancing criteria, on financial cost criteria, or on time related criteria.

13. The method of claim 10 comprising measuring path traffic and dynamically updating cost information associated with the path list and wherein assigning voice over IP sessions to the paths in the path list based on traffic engineering criteria includes assigning voice. over IP sessions to the paths based on dynamically updated cost information.

14. The method of claim 10 wherein assigning sessions to the voice over I P paths includes assigning sessions to the voice over IP paths from the media gateway, assigning sessions from a softswitch associated with the media gateway, or assigning sessions from a voice over IP traffic engineering server associated with the media gateway.

15. The method of claim 10 comprising updating the path list and wherein assigning sessions to the voice over IP paths includes assigning new sessions to voice over IP paths in the updated path list or reassigning existing sessions to the paths in the updated path list.

16. The method of claim 14 wherein assigning sessions to the voice over IP paths includes:
(a) assigning a first session to a first path associated with a first interface in the media gateway and sending and receiving media stream packets associated with the first session through the first interface;
(b) receiving packets associated with the first session over a second interface of the media gateway;
(c) determining whether the media gateway is configured to allow dynamic path re-assignment for existing sessions;
(d) in response to determining that the media gateway is configured to allow dynamic path reassignment for existing sessions, assigning the session to a new path associated with the second interface; and
(e) in response to determining that the media gateway is not configured to allow dynamic path reassignment for existing sessions, dropping the first session.

17. The method of claim 1 wherein the per interface routers refrain from advertising routing information received by other per interface routers.

18. The method of claim 1 wherein the per interface routers refrain from routing data traffic that is not associated with a VoIP session.

19. A network-aware media gateway with multi-appearing voice over IP (VoIP) hosts, the media gateway (300) comprising:
(a) a plurality voice over IP hosts (H1~H4) containing voice processing resources for processing media streams associated with media communication sessions between *media* gateways, the voice over IP hosts being assigned a first set of IP addresses (IP_{V1}~IP_{V4});
**characterized in that**:
(b) a plurality of network interfaces (I1∼I3) for connecting the voice over IP hosts to an external network (304), the network interfaces being assigned a second set of IP addresses (IP_{I1}~IP_{I3}), wherein IP addresses in the second set are different from IP addresses in the first set; and
(c) a plurality of per interface routers (R1∼R3) associated with the network interfaces, wherein the per interface routers advertise reachability information regarding at least one of the voice over IP hosts to the network via at least two of the interfaces and wherein the per interface routers receive network routing information from the network and dynamically generate and maintain per interface routing tables.

20. The media gateway of claim 19 comprising a plurality of internal links for connecting the voice over IP hosts to the network interfaces and a cost matrix (310) including costs associated with each of the internal links.

21. The media gateway of claim 20 wherein at least one of the costs in the cost matrix is substantially equal to a network route cost to a remote voice over IP host (H5, H6) or
wherein at least one of the costs in the cost matrix is at least one order of magnitude greater than a network route cost to a remote voice over IP host, or wherein at least one of the cost in the cost matrix is at least one order of magnitude of less than a network route cost to a remote voice over IP host.

22. The media gateway of claim 19 comprising a resource manager (308) for managing resources of the media gateway, wherein the resource manager is adapted to execute a VoIP path selection algorithm for generating a list (314) of voice over IP paths to a remote voice over IP destination based on the per interface routing tables.

23. The media gateway of claim 22 wherein the resource manager .is adapted to execute a destination-fixed path selection algorithm wherein the path list is generated by selecting a predetermined number of lowest-cost paths from the voice over IP hosts in the media gateway to a fixed destination voice over IP host, or
wherein the resource manager is adapted to execute a matrix walk path selection algorithm wherein the resource manager generates an end to end cost matrix (312) including costs between voice over IP hosts in the media gateway and remote voice over IP hosts and selects best voice over IP paths for the path list based on the end to end cost matrix, or wherein the resource manager is adapted to execute a paired path selection algorithm wherein the resource manager generates a cost matrix and selects the best voice over IP paths for the path list by selecting paths from the cost matrix and successively removing voice over IP hosts associated with each selected path from the cost matrix.

24. The media gateway of claim 22 for wherein the resource manager is adapted to assign media sessions to voice over IP paths in the path list.

25. The media gateway of claim 24 wherein the resource manager is adapted to assign voice over IP sessions to the voice over IP paths based on traffic engineering criteria.

26. The media gateway of claim 25 wherein the traffic engineering criteria includes path routing costs relative loading of the voice over IP paths, or time based criteria.

27. The media gateway of claim 24 wherein the resource manager is adapted to dynamically measure traffic conditions on each of the voice over IP paths and assign the sessions to the voice over IP paths based on the dynamically measured traffic conditions, or the resource manager is adapted to detect whether packets associated with an existing session arrive on a new interface, and, in response, to dynamically assign the existing session to a new path.

28. A computer program product comprising computer executable instructions embodied in a computer readable medium for performing steps comprising:
(a) assigning a first set of voice over IP addresses (IP_{V1}~IP_{V4}) to a plurality of voice over IP hosts (H1~H4) in a media gateway (300);
**characterized in that**:
(b) assigning a second set of voice over IP addresses (IP_{I1}~IP_{I3}) to a plurality of network interfaces (I1∼I3) in the media gateway, wherein IP addresses in the second set differ from IP addresses in the first set;
(c) advertising reachability information regarding at least one of the voice over IP hosts to a network (304) via at least two of the network interfaces; and
(d) dynamically generating per-interface routing tables associated with each of the network interfaces based on routing information received from the network.

29. The computer program product of claim 28 comprising assigning costs to internal associations between the voice over IP hosts and the network interfaces.

30. The computer program of claim 29 wherein assigning costs includes assigning costs that are substantially equal to network routing costs to remote voice over IP hosts (H5,H6), or
wherein assigning costs includes assigning costs that are at least one order of magnitude greater than network routing costs to remote voice over IP hosts, or wherein assigning costs includes assigning costs that are at least one order of magnitude of less than network routing costs to remote voice over IP hosts.

31. The computer program product of claim 28 comprising generating a voice over IP path list (314) including voice over IP paths to a remote media gateway (302) based on the per-interface routing tables.

32. The computer program product of claim 31 wherein generating a voice over IP path list includes generating a voice over IP path list using a destination-fixed path selection algorithm that includes selecting a predetermined number of best paths from the voice over IP host to a fixed voice over IP destination associated with the remote media gateway, or
wherein generating a voice over IP path list includes generating the voice over IP path list using a matrix walk algorithm that includes generating an end-to-end cost matrix (312) between the voice over IP hosts and voice IP hosts associated with the remote media gateway and selecting a predetermined number of lowest cost paths from the end-to-end cost matrix, or
wherein generating a voice over IP path list includes generating a voice over IP path list using a paired selection algorithm that includes generating a cost matrix indicating costs of paths between the voice over IP hosts and voice over IP hosts associated with the remote media gateway, iteratively selecting lowest cost paths from the cost matrix, and removing voice over IP hosts associated with each selected path from the matrix.

33. The computer program product .of claim 31 comprising assigning voice over IP sessions to the voice over IP paths in the path list.

34. The computer program product of claim 33 wherein assigning voice over IP sessions to the voice over IP paths includes assigning the voice over IP sessions to the voice over IP paths based on traffic engineering criteria.

35. The computer program product of claim 34 wherein the traffic engineering criteria include load-based traffic engineering criteria, cost-based traffic engineering criteria, or time-based traffic engineering criteria.

36. The computer program product of claim 34 comprising dynamically measuring traffic conditions on the voice over IP paths and wherein assigning sessions to the voice over IP paths based on traffic engineering criteria includes assigning the sessions to the voice over IP paths based on the dynamically measured traffic conditions on the paths.

## Patentansprüche

1. Verfahren zum Bereitstellen eines netzwerkfähigen Mediengateways, welches IP-Telefonie- (VoIP)-Hosts aufweist, wobei das Verfahren in einem Mediengateway (300) aufweist:
(a) Bereitstellen einer Vielzahl von IP-Telefonie-Hosts (H1-H4), welche Medienverarbeitungsmodule zum Verarbeiten von Medienströmen, welche mit Mediensitzungen zwischen Mediengateways verknüpft sind, aufweisen;
(b) Zuweisen eines ersten Satzes von IP-Adressen (IP_{V1}-IP_{V4}) zu den IP-Telefonie-Hosts;
**gekennzeichnet durch**:
(c) Bereitstellen einer Vielzahl von Netzwerkschnittstellen (I1-I3) zum Verbinden der IP-Telefonie-Hosts an ein Netzwerk (304);
(d) Zuweisen eines zweiten Satzes von IP-Adressen (IP_{I1}-IP_{I3}) zu den Netzwerkschnittstellen, wobei Adressen in dem zweiten Satz von IP-Adressen sich von Adressen in dem ersten Satz von IP-Adressen unterscheiden; und
(e) Bereitstellen einer Vielzahl von Schnittstellen-basierten Routern (R1-R3), welche der Vielzahl von Netzwerkschnittstellen korrespondieren, wobei die Schnittstellen-basierten Router Erreichbarkeitsinformationen bezüglich mindestens eines der IP-Telefonie-Hosts dem Netzwerk über zumindest zwei der Schnittstellen bekannt geben und wobei die Schnittstellen-basierten Router Netzwerk-Routinginformationen von dem Netzwerk empfangen und Schnittstellen-basierte Routingtabellen basierend auf den Netzwerk-Routinginformationen erzeugen.

2. Verfahren nach Anspruch 1, aufweisend das Zuweisen von Kosten zu internen Verknüpfungen zwischen den Schnittstellen-basierten Routern und IP-Telefonie-Hosts, welche über die Schnittstellen-basierten Router erreichbar sind.

3. Verfahren nach Anspruch 2, wobei das Zuweisen von Kosten zu internen Verknüpfungen zwischen den Schnittstellen-basierten Routern und IP-Telefonie-Hosts, welche über die Schnittstellen-basierten Router erreichbar sind, das Zuweisen von Kosten beinhaltet, welche im Wesentlichen gleich den Netzwerk-Routingkosten zu entfernten IP-Telefonie-Hosts sind.

4. Verfahren nach Anspruch 2, wobei das Zuweisen von Kosten zu internen Verknüpfungen zwischen den Schnittstellen-basierten Routern und IP-Telefonie-Hosts, welche über die Schnittstellen-basierten Router erreichbar sind, das Zuweisen von Kosten beinhaltet, welche mindestens eine Größenordnung größer sind, als Netzwerk-Routingkosten zu entfernten IP-Telefonie-Hosts.

5. Verfahren nach Anspruch 2, wobei das Zuweisen von Kosten zu internen Verknüpfungen zwischen den Schnittstellen-basierten Routern und IP-Telefonie-Hosts, welche über die Schnittstellen-basierten Router erreichbar sind, das Zuweisen von Kosten zu den Verbindungen beinhaltet, welche mindestens eine Größenordnung geringer sind als die Netzwerk-Routingkosten zu entfernten IP-Telefonie-Hosts.

6. Verfahren nach Anspruch 1, aufweisend das Ausführen eines Pfadauswahlalgorithmus, um eine Liste von IP-Telefonie-Pfaden (314) zu einem entfernten IP-Telefonie-Host (H5, H6), basierend auf den Schnittstellen-basierten Routingtabellen, zu bestimmen.

7. Verfahren nach Anspruch 6, wobei das Ausführen eines Pfadauswahlalgorithmus das Ausführen eines zielfixierten Pfadauswahlalgorithmus beinhaltet, in dem die Pfade mit niedrigsten Kosten von jedem der IP-Telefonie-Hosts in dem Mediengateway zu einem festen Ziel IP-Telefonie-Host ausgewählt werden.

8. Verfahren nach Anspruch 6, wobei das Ausführen eines Pfadauswahlalgorithmus das Ausführen eines Matrixlauf-Pfadauswahlalgorithmus beinhaltet, welcher beinhaltet:
(a) Berechnen einer Ende-zu-Ende-Kostenmatrix (312), welche die Routingkosten zwischen den IP-Telefonie-Hosts in dem Mediengateway und IP-Telefonie-Hosts in einem Ziel-Mediengateway (302) angibt; und
(b) Auswählen einer vorgegebenen Anzahl von Pfaden mit niedrigsten Kosten aus der Ende-zu-Ende-Kostenmatrix.

9. Verfahren nach Anspruch 6, wobei das Ausführen eines Pfadauswahlalgorithmus das Ausführen eines gepaarten Pfadauswahlalgorithmus beinhaltet, welcher beinhaltet:
(a) Berechnen einer Ende-zu-Ende-Kostenmatrix, welche die Gesamtkosten von Routen zwischen IP-Telefonie-Hosts in dem Mediengateway und einer Vielzahl von IP-Telefonie-Zielhosts in einem Zielmediengateway angibt;
(b) Auswählen eines Pfades mit niedrigsten Kosten aus der Kostenmatrix und Hinzufügen des Pfades mit niedrigsten Kosten zu der Pfadliste;
(c) Entfernen von IP-Telefonie-Hosts, welche mit dem Pfad niedrigster Pfadkosten verknüpft sind, aus der Matrix; und
(d) Wiederholen des Schrittes des Auswählens von Pfaden mit niedrigsten Kosten und des Schrittes des Entfernens von IP-Telefonie-Hosts bis eine vorgegebene Anzahl an Pfaden mit niedrigsten Kosten in der Pfadliste vorhanden sind.

10. Verfahren nach Anspruch 6, aufweisend das Zuweisen von IP-Telefonie-Sitzungen zu Pfaden in der Pfadliste.

11. Verfahren nach Anspruch 10, wobei das Zuweisen von IP-Telefonie-Sitzungen zu den Pfaden in der Pfadliste das Zuweisen von IP-Telefonie-Sitzungen zu den Pfaden unter Verwendung von Datenflussgestaltungskriterien aufweist.

12. Verfahren nach Anspruch 11, wobei das Zuweisen von IP-Telefonie-Sitzungen zu den Pfaden basierend auf Datenflussgestaltungskriterien das Zuweisen von IP-Telefonie-Sitzungen zu den Pfaden basierend auf Lastausgleichskriterien, auf finanziellen Kostenkriterien oder auf zeitbezogenen Kriterien aufweist.

13. Verfahren nach Anspruch 10, aufweisend das Messen von Pfaddatenfluss und das dynamische Aktualisieren von Kosteninformationen, welche mit der Pfadliste verknüpft sind, und wobei das Zuweisen von IP-Telefonie-Sitzungen zu den Pfaden in der Pfadliste basierend auf Datenflussgestaltungskriterien das Zuweisen von IP-Telefonie-Sitzungen zu den Pfaden basierend auf dynamisch aktualisierten Kosteninformationen beinhaltet.

14. Verfahren nach Anspruch 10, wobei das Zuweisen von Sitzungen zu den IP-Telefonie-Pfaden das Zuweisen von Sitzungen zu den IP-Telefonie-Pfaden von dem Mediengateway oder das Zuweisen von Sitzungen von einem Softswitch, welcher mit dem Mediengateway verknüpft ist, oder das Zuweisen von Sitzungen von einem IP-Telefonie-Datenflussgestaltungsserver, welcher mit dem Mediengateway verknüpft ist, aufweist.

15. Verfahren nach Anspruch 10, aufweisend das Aktualisieren der Pfadliste und wobei das Zuweisen von Sitzungen zu den IP-Telefonie-Pfaden das Zuweisen neuer Sitzungen zu den IP-Telefonie-Pfaden in der aktualisierten Pfadliste oder das Wiederzuweisen existierender Sitzungen zu den Pfaden in der aktualisierten Pfadliste beinhaltet.

16. Verfahren nach Anspruch 14, wobei das Zuweisen von Sitzungen zu den IP-Telefonie-Pfaden beinhaltet:
(a) Zuweisen einer ersten Sitzung zu einem ersten Pfad, welcher mit einer ersten Schnittstelle in dem Mediengateway verknüpft ist, und Senden und Empfangen von Medienstrompaketen, welche mit der ersten Sitzung durch die erste Schnittstelle verknüpft sind;
(b) Empfangen von Paketen, welche mit der ersten Sitzung verknüpft sind, über eine zweite Schnittstelle des Mediengateways;
(c) Bestimmen, ob das Mediengateway dazu konfiguriert ist, dynamische Pfadneuzuweisungen für existierende Sitzungen zu erlauben;
(d) Als Reaktion auf das Bestimmen, dass das Mediengateway dazu ausgebildet ist, dynamische Pfadneuzuweisungen für existierende Sitzungen zu erlauben, Zuweisen der Sitzung zu einem neuen Pfad, welcher mit der zweiten Schnittstelle verknüpft ist; und
(e) Als Reaktion auf das Bestimmen, dass das Mediengateway nicht dazu ausgebildet ist, dynamische Pfadneuzuweisungen für existierende Sitzungen zu erlauben, Fallenlassen der ersten Sitzung.

17. Verfahren nach Anspruch 1, wobei die Schnittstellen-basierten Router sich damit zurückhalten, Routinginformationen, welche sie von anderen Schnittstellen-basierten Routern empfangen haben, bekannt zu geben.

18. Verfahren nach Anspruch 1, wobei die Schnittstellen-basierten Router sich damit zurückhalten, Datenverkehr zu routen, welcher nicht mit einer VoIP-Sitzung verknüpft ist.

19. Netzwerkfähiges Mediengateway mit mehrfach auftauchenden IP-Telefonie-(VoIP)-Hosts, wobei das Mediengateway (300) aufweist:
(a) eine Vielzahl von IP-Telefonie-Hosts (H1-H4), welche Sprachverarbeitungsressourcen zum Verarbeiten von Medienströmen, welche mit Medienkommunikationssitzungen zwischen Mediengateways verknüpft sind, aufweisen, wobei den IP-Telefonie-Hosts ein erster Satz von IP-Adressen (IP_{V1}-IP_{V4}) zugewiesen ist;
**gekennzeichnet durch**:
(b) eine Vielzahl von Netzwerkschnittstellen (I1-I3) zum Verbinden der IP-Telefonie-Hosts an ein externes Netzwerk (304), wobei den Netzwerkschnittstellen ein zweiter Satz von IP-Adressen (IP_{I1}-IP_{I3}) zugewiesen ist, wobei IP-Adressen in dem zweiten Satz unterschiedlich zu IP-Adressen in dem ersten Satz sind; und
(c) eine Vielzahl von Schnittstellen-basierten Routern (R1-R3), welche mit den Netzwerkschnittstellen verknüpft sind, wobei die Schnittstellen-basierten Router Erreichbarkeitsinformationen bezüglich mindestens eines der IP-Telefonie-Hosts über mindestens zwei der Schnittstellen im Netzwerk bekannt geben und wobei die Schnittstellen-basierten Router Netzwerk-Routinginformationen von dem Netzwerk empfangen und dynamisch Schnittstellen-basierte Routingtabellen erzeugen und warten.

20. Mediengateway nach Anspruch 19, aufweisend eine Vielzahl von internen Verbindungen zum Verbinden der IP-Telefonie-Hosts an die Netzwerkschnittstellen und eine Kostenmatrix (310), welche die Kosten, welche mit jeder der internen Verbindungen verknüpft sind, aufweist.

21. Mediengateway nach Anspruch 20, wobei mindestens einer der Kostenwerte in der Kostenmatrix im Wesentlichen gleich den Kosten einer Netzwerkroute zu einem entfernten IP-Telefonie-Host (H5, H6) ist, oder
wobei mindestens einer der Kostenwerte in der Kostenmatrix mindestens eine Größenordnung größer als die Kosten einer Netzwerkroute zu einem entfernten IP-Telefonie-Host ist, oder
wobei mindestens einer der Kostenwerte in der Kostenmatrix mindestens eine Größenordnung geringer ist, als die Kosten einer Netzwerkroute zu einem entfernten IP-Telefonie-Host.

22. Mediengateway nach Anspruch 19, aufweisend einen Ressourcenmanager (308) zum Verwalten der Ressourcen des Mediengateways, wobei der Ressourcenmanager dazu ausgebildet ist, einen VoIP-Pfadauswahlalgorithmus zum Erzeugen einer Liste (314) von IP-Telefonie-Pfaden zu einem entfernten IP-Telefonie-Ziel, basierend auf den Schnittstellen-basierten Routingtabellen, auszuführen.

23. Mediengateway nach Anspruch 22, wobei der Ressourcenmanager dazu ausgebildet ist, einen zielfixierten Pfadauswahlalgorithmus auszuführen, wobei die Pfadliste durch das Auswählen einer vorgegebenen Anzahl von Pfaden mit niedrigsten Kosten von den IP-Telefonie-Hosts in dem Mediengateway zu einem festgelegten IP-Telefonie-Zielhost, erzeugt wird, oder
wobei der Ressourcenmanager dazu ausgebildet ist, einen Matrixlaufpfad-Auswahlalgorithmus auszuführen, wobei der Ressourcenmanager eine Ende-zu-Ende-Kostenmatrix (312) erzeugt, welche die Kosten zwischen IP-Telefonie-Hosts in dem Mediengateway und entfernten IP-Telefonie-Host beinhaltet, und die besten IP-Telefonie-Pfade für die Pfadliste basierend auf der Ende-zu-Ende-Kostenmatrix auswählt, oder wobei der Ressourcenmanager dazu ausgebildet ist, einen gepaarten Pfadauswahlalgorithmus auszuführen, wobei der Ressourcenmanager eine Kostenmatrix erzeugt und die besten IP-Telefonie-Pfade für die Pfadliste auswählt, indem er Pfade aus der Kostenmatrix auswählt und nacheinander IP-Telefonie-Hosts entfernt, welche mit jedem ausgewählten Pfad aus der Kostenmatrix verknüpft sind.

24. Mediengateway nach Anspruch 22, wobei der Ressourcenmanager dazu ausgebildet ist, IP-Telefonie-Pfaden in der Pfadliste Mediensitzungen zuzuweisen.

25. Mediengateway nach Anspruch 24, wobei der Ressourcenmanager dazu ausgebildet ist, IP-Telefonie-Sitzungen zu IP-Telefonie-Pfaden basierend auf Datenverkehrsgestaltungskriterien zuzuweisen.

26. Mediengateway nach Anspruch 25, wobei die Datenverkehrgestaltungskriterien Pfadroutingkosten bezogen auf die Auslastung der IP-Telefonie-Pfade oder zeitbasierte Kriterien beinhalten.

27. Mediengateway nach Anspruch 24, wobei der Ressourcenmanager dazu ausgebildet ist, Datenverkehrsbedingungen auf jedem der IP-Telefonie-Pfade dynamisch zu messen und die Sitzungen den IP-Telefonie-Pfaden basierend auf den dynamisch gemessenen Datenverkehrsbedingungen zuzuweisen, oder wobei der Ressourcenmanager dazu ausgebildet ist, zu erkennen, ob Pakete, welche mit einer existierenden Sitzung verknüpft sind, auf einer neuen Schnittstelle ankommen, und als Reaktion darauf, die existierende Sitzung einem neuen Pfad dynamisch zuzuweisen.

28. Computerprogrammprodukt aufweisend computerausführbare Befehle, welche in einem computerlesbaren Medium beinhaltet sind, zum Ausführen von Schritten, aufweisend:
(a) Zuweisen eines ersten Satzes von IP-Telefonie-Adressen (IP_{V1}-IP_{V4}) zu einer Vielzahl von IP-Telefonie-Hosts (H1-H4) in einem Mediengateway (300);
**gekennzeichnet durch**:
(b) Zuweisen eines zweiten Satzes von IP-Telefonie-Adressen (IP_{I1}-IP_{I3}) zu einer Vielzahl von Netzwerkschnittstellen (I1-I3) in dem Mediengateway, wobei sich IP-Adressen in dem zweien Satz von IP-Adressen in dem ersten Satz unterscheiden;
(c) Bekanntgeben von Erreichbarkeitsinformationen bezüglich mindestens eines der IP-Telefonie-Hosts an ein Netzwerk (304) über mindestens zwei der Netzwerkschnittstellen; und
(d) dynamisches Erzeugen Schnittstellen-basierter Routingtabellen, welche mit jeder der Netzwerkschnittstellen verknüpft sind, basierend auf Routinginformationen, welche von dem Netzwerk empfangen wurden.

29. Computerprogrammprodukt nach Anspruch 28, aufweisend das Zuweisen von Kosten zu internen Verknüpfungen zwischen den IP-Telefonie-Hosts und den Netzwerkschnittstellen.

30. Computerprogrammprodukt nach Anspruch 29, wobei das Zuweisen von Kosten das Zuweisen von Kosten, welche im Wesentlichen gleich den Netzwerkroutingkosten zu entfernten IP-Telefonie-Hosts (H5, H6) sind, beinhaltet, oder
wobei das Zuweisen von Kosten das Zuweisen von Kosten, welche mindestens eine Größenordnung größer als Netzwerkroutingkosten zu entfernten IP-Telefonie-Hosts sind, beinhaltet oder wobei das Zuweisen von Kosten das Zuweisen von Kosten, welche mindestens eine Größenordnung kleiner als die Netzwerkroutingkosten zu entfernten IP-Telefonie-Hosts sind, beinhaltet.

31. Computerprogrammprodukt nach Anspruch 28, aufweisend das Erzeugen einer IP-Telefonie-Pfadliste (314), welche IP-Telefonie-Pfade zu einem entfernten Mediengateway (302) beinhaltet, basierend auf den Schnittstellen-basierten Routingtabellen.

32. Computerprogrammprodukt nach Anspruch 31, wobei das Erzeugen einer IP-Telefonie-Pfadliste das Erzeugen einer IP-Telefonie-Pfadliste unter Verwendung eines zielfixierten Pfadauswahlalgorithmus beinhaltet, welcher beinhaltet, eine vorgegebene Anzahl von besten Pfaden von dem IP-Telefonie-Host zu einem festen IP-Telefonie-Ziel auszuwählen, welche mit dem entfernten Mediengateway verknüpft sind, oder
wobei das Erzeugen einer IP-Telefonie-Pfadliste das Erzeugen einer IP-Telefonie-Pfadliste unter Verwendung eines Matrixlaufalgorithmus beinhaltet, welcher beinhaltet eine Ende-zu-Ende-Kostenmatrix (312) zwischen den IP-Telefonie-Hosts und IP-Telefonie-Hosts, welche mit dem entfernten Mediengateway verknüpft sind, zu erzeugen und eine Vorbestimmte Anzahl von Pfaden niedrigster Kosten aus der Ende-zu-Ende-Kostenmatrix auszuwählen, oder
wobei das Erzeugen einer IP-Telefonie-Pfadliste das Erzeugen einer IP-Telefonie-Pfadliste unter Verwendung eines gepaarten Auswahlalgorithmus beinhaltet, welcher das Erzeugen einer Kostenmatrix beinhaltet, welche die Kosten von Pfaden zwischen den IP-Telefonie-Hosts und IP-Telefonie-Hosts, welche mit dem entfernten Mediengateway verknüpft sind, anzeigt, iterativ die Pfad niedrigster Kosten aus der Kostenmatrix auszuwählen und die IP-Telefonie-Hosts, welche mit jedem ausgewählten Pfad aus der Matrix verknüpft sind, zu entfernen.

33. Computerprogrammprodukt nach Anspruch 31, aufweisend das Zuweisen von IP-Telefonie-Sitzungen zu den IP-Telefonie-Pfaden in der Pfadliste.

34. Computerprogrammprodukt nach Anspruch 33, wobei das Zuweisen von IP-Telefonie-Sitzungen zu den IP-Telefonie-Pfaden das Zuweisen von IP-Telefonie-Sitzungen zu den IP-Telefonie-Pfaden basierend auf Datenflussgestaltungskriterien aufweist.

35. Computerprogrammprodukt nach Anspruch 34, wobei die Datenflussgestaltungskriterien auslastungsbasierte Datenflussgestaltungskriterien, kostenbasierte Datenflussgestaltungskriterien oder zeitbasierte Datenflussgestaltungskriterien aufweisen.

36. Computerprogrammprodukt nach Anspruch 34, aufweisend das dynamische Messen von Datenflussbedingungen auf den IP-Telefonie-Pfaden und wobei das Zuweisen von Sitzungen zu den IP-Telefonie-Pfaden basierend auf Datenflussgestaltungskriterien das Zuweisen von Sitzungen zu den IP-Telefonie-Pfaden basierend auf den dynamisch gemessenen Datenflussbedingungen auf den Pfaden beinhaltet.

## Revendications

1. Procédé de fourniture d'une passerelle média sensible au réseau ayant des hôtes VoIP, le procédé comprenant dans une passerelle média (300) :
(a) la fourniture d'une pluralité d'hôtes VoIP (H1~H4) contenant des modules de traitement média pour le traitement de flux média en association avec des sessions média entre des passerelles média ;
(b) l'attribution d'un premier ensemble d'adresses IP (IP_{V1}-IP_{V4}) aux hôtes VoIP ;
**caractérisé par** :
(c) la fourniture d'une pluralité d'interfaces réseau (I1∼I3) destinées à relier les hôtes VoIP à un réseau (304) ;
(d) l'attribution d'un second ensemble d'adresses IP (IP_{I1}-IP_{I3}) aux interfaces réseau, dans lesquelles les adresses dans le second ensemble d'adresses IP sont différentes des adresses dans le premier ensemble d'adresses IP ; et
(e) la fourniture d'une pluralité de routeurs par interface (R1∼R3) correspondant à la pluralité d'interfaces réseau, dans lesquelles les routeurs par interface diffusent des informations d'accessibilité concernant au moins un des hôtes VoIP au réseau par l'intermédiaire d'au moins deux des interfaces et dans lesquelles les routeurs par interface reçoivent des informations de routage réseau en provenance du réseau et génèrent des tables de routage par interface sur la base des informations de routage réseau.

2. Procédé selon la revendication 1 comprenant l'attribution de coûts à des associations internes entre les routeurs par interface et des hôtes VoIP accessibles par l'intermédiaire des routeurs par interface.

3. Procédé selon la revendication 2 dans lequel l'attribution de coûts à des associations internes entre les routeurs par interface et des hôtes VoIP accessibles par les routeurs par interface comprend l'attribution de coûts qui sont sensiblement égaux aux coûts de route réseau vers des hôtes VoIP distants.

4. Procédé selon la revendication 2 dans lequel l'attribution de coûts à des associations internes entre les routeurs par interface et des hôtes VoIP accessibles par l'intermédiaire des routeurs par interface comprend l'attribution de coûts qui sont au moins d'un ordre de grandeur plus élevé que les coûts de route réseau vers des hôtes VoIP distants.

5. Procédé selon la revendication 2 dans lequel l'attribution de coûts à des associations internes entre les routeurs par interface et des hôtes VoIP accessibles par l'intermédiaire des routeurs par interface comprend l'attribution de coûts aux liaisons qui sont au moins d'un ordre de grandeur inférieur aux coûts de route réseau vers des hôtes VoIP distants.

6. Procédé selon la revendication 1 comprenant l'exécution d'un algorithme de sélection de voies destinée à déterminer une liste des voies VoIP (314) vers un hôte VoIP distant (H5, H6) sur la base des tables de routage par interface.

7. Procédé selon la revendication 6 dans lequel l'exécution d'un algorithme de sélection de voies comprend l'exécution d'un algorithme de sélection de voies à destination fixe où les voies à coûts les plus bas depuis chacun des hôtes VoIP dans la passerelle média sont sélectionnées vers un hôte VoIP à destination fixe.

8. Procédé selon la revendication 6 dans lequel l'exécution d'un algorithme de sélection de voies comprend l'exécution d'un algorithme de sélection de voies par parcours matriciel comprenant :
(a) le calcul d'une matrice de coûts de bout en bout (312) indiquant des coûts de routage entre les hôtes VoIP dans la passerelle média et les hôtes VoIP dans une passerelle média de destination (302) ; et
(b) la sélection d'un nombre prédéterminé de voies à coûts les plus bas à partir de la matrice de coûts de bout en bout.

9. Procédé selon la revendication 6 dans lequel l'exécution d'un algorithme de sélection de voies comprend l'exécution d'un algorithme de sélection de voies par paires comprenant :
(a) le calcul d'une matrice de coûts de bout en bout indiquant les coûts totaux de routes entre les hôtes VoIP dans la passerelle média et une pluralité d'hôtes VoIP de destination dans une passerelle média de destination ;
(b) la sélection d'une voie à coûts les plus bas depuis la matrice de coûts et l'ajout de la voie à coûts les plus bas à la liste des voies ;
(c) le retrait d'hôtes VoIP en association avec la voie à coûts les plus bas depuis la matrice ; et
(d) la répétition des étapes de sélection des voies à coûts les plus bas et des hôtes VoIP jusqu'à ce qu'un nombre prédéterminé de voies à coûts les plus bas soit présent dans la liste des voies.

10. Procédé selon la revendication 6 comprenant l'attribution de sessions de VoIP à des voies dans la liste des voies.

11. Procédé selon la revendication 10 dans lequel l'attribution de sessions de VoIP aux voies dans la liste des voies VoIP comprend l'attribution de sessions de VoIP aux voies utilisant des critères d'ingénierie du trafic.

12. Procédé selon la revendication 11 dans lequel l'attribution de sessions de VoIP aux voies sur la base de critères d'ingénierie du trafic comprend l'attribution de sessions de VoIP aux voies sur la base de critères d'équilibre de charges, de critères de coûts financiers, ou de critères temporels.

13. Procédé selon la revendication 10 comprenant la mesure du trafic sur les voies et l'actualisation dynamique des informations de coûts en association avec la liste des voies et dans lequel l'attribution de sessions de VoIP aux voies dans la liste des voies sur la base de critères d'ingénierie du trafic comprend l'attribution de sessions de VoIP aux voies sur la base d'informations de coûts actualisées dynamiquement.

14. Procédé selon la revendication 10 dans lequel l'attribution de sessions aux voies VoIP comprend l'attribution de sessions aux voies VoIP depuis la passerelle média, l'attribution de sessions depuis un commutateur logiciel associé à la passerelle média, ou l'attribution de sessions depuis un serveur d'ingénierie du trafic VoIP en association avec la passerelle média.

15. Procédé selon la revendication 10 comprenant l'actualisation de la liste des voies et dans lequel l'attribution de sessions aux voies VoIP comprend l'attribution de nouvelles sessions aux voies VoIP dans la liste des voies actualisée ou la réattribution de sessions existantes aux voies dans la liste des voies actualisée.

16. Procédé selon la revendication 14 dans lequel l'attribution de sessions aux VoIP comprend :
(a) l'attribution d'une première session à une première voie en association avec une première interface dans la passerelle média et envoi et réception de paquets de flux média en association avec la première session par l'intermédiaire de la première interface ;
(b) la réception de paquets en association avec la première session sur une seconde interface de la passerelle média ;
(c) la détermination si la passerelle média est configurée pour permettre une réattribution de voies dynamiques pour les sessions existantes ;
(d) en réponse à la détermination selon laquelle la passerelle média est configurée pour permettre une réattribution de voies dynamiques pour les sessions existantes, l'attribution de la session à une nouvelle voie en association avec la seconde interface ; et
(e) en réponse à la détermination selon laquelle la passerelle média n'est pas configurée pour permettre une réattribution de voies dynamiques pour les sessions existantes, abandonnant la première session.

17. Procédé selon la revendication 1 dans lequel les routeurs par interface empêchent de diffuser les informations de routage reçues par d'autres routeurs par interface.

18. Procédé selon la revendication 1 dans lequel les routeurs par interface empêchent de router le trafic de données qui n'est pas associé à une session de VoIP.

19. Passerelle média sensible au réseau ayant des hôtes VoIP à apparences multiples, la passerelle média (300) comprenant :
(a) une pluralité d'hôtes VoIP (H1∼H4) contenant des ressources de traitement de voix pour le traitement de flux média en association avec des sessions de communication média entre des passerelles média, les hôtes VoIP étant attribués à un premier ensemble d'adresses IP (IPv1∼IPv4) ;
**caractérisée par** :
(b) une pluralité d'interfaces réseau (I1∼I3) destinées à relier les hôtes VoIP à un réseau extérieur (304), les interfaces réseau étant attribuées à un second ensemble d'adresses IP (IP_{I1}∼IP_{I3}), dans lesquelles les adresses IP dans le second ensemble sont différentes des adresses IP dans le premier ensemble ; et
(c) une pluralité de routeurs par interface (R1∼R3) associés aux interfaces réseau, dans lesquelles les routeurs par interface diffusent des informations d'accessibilité concernant au moins un des hôtes VoIP au réseau par l'intermédiaire d'au moins deux des interfaces et dans lesquelles les routeurs par interface reçoivent des informations de routage réseau depuis le réseau et génèrent et conservent des tables de routage par interface.

20. Passerelle média selon la revendication 19 comprenant une pluralité de liaisons internes pour relier les hôtes VoIP aux interfaces réseau et une matrice de coûts (310) comprenant des coûts en association avec chacune des liaisons internes.

21. Passerelle média selon la revendication 20 dans laquelle au moins un des coûts dans la matrice de coûts est sensiblement égal à un coût de route réseau vers un hôte VoIP distant (H5, H6) ou
dans laquelle au moins un des coûts dans la matrice de coûts est au moins d'un ordre de grandeur supérieur à un coût de route réseau vers un hôte VoIP distant, ou dans laquelle au moins un des coûts dans la matrice de coûts est au moins d'un ordre de grandeur inférieur à un coût de route réseau vers un hôte VoIP distant.

22. Passerelle média selon la revendication 19 comprenant un gestionnaire de ressources (308) destiné à gérer les ressources de la passerelle média, dans laquelle le gestionnaire de ressources est conçu pour exécuter un algorithme de sélection de voies VoIP pour générer une liste (314) de voies VoIP vers une destination VoIP distante sur la base des tables de routage par interface.

23. Passerelle média selon la revendication 22 dans laquelle le gestionnaire de ressources est conçu pour exécuter un algorithme de sélection de voies à destination fixe, dans laquelle la liste des voies est générée en sélectionnant un nombre prédéterminé de voies aux coûts le plus bas depuis les hôtes VoIP dans la passerelle média vers un hôte VoIP à destination fixe, ou
dans laquelle le gestionnaire de ressources est conçu pour exécuter un algorithme de sélection de voies par parcours matriciel, dans laquelle le gestionnaire de ressources génère une matrice de coûts de bout en bout (312) comprenant des coûts entre des hôtes VoIP dans la passerelle média et des hôtes VoIP distantes et sélectionne les meilleures voies VoIP pour la liste des voies sur la base de la matrice de coûts de bout en bout, ou dans laquelle le gestionnaire de ressources est conçu pour exécuter un algorithme de sélection de voies par paires, dans laquelle le gestionnaire de ressources génère une matrice de coûts et sélectionne les voies VoIP pour la liste des voies en sélectionnant des voies depuis la matrice de coûts et en retirant les hôtes VoIP en association avec chacune des voies sélectionnées depuis la matrice de coûts.

24. Passerelle média selon la revendication 22 dans laquelle le gestionnaire de ressources est conçu pour attribuer des sessions média à des voies VoIP dans la liste des voies.

25. Passerelle média selon la revendication 24 dans laquelle le gestionnaire de ressources est conçu pour attribuer des sessions de VoIP aux voies VoIP sur la base de critères d'ingénierie du trafic.

26. Passerelle média selon la revendication 25 dans laquelle les critères d'ingénierie du trafic comprennent les coûts de routage des voies en fonction de la charge des voies VoIP, ou des critères temporels.

27. Passerelle média selon la revendication 24 dans laquelle le gestionnaire de ressources est conçu pour mesurer dynamiquement les conditions du trafic sur chacune des voies VoIP et pour attribuer les sessions aux voies VoIP sur la base des conditions du trafic mesuré dynamiquement, ou le gestionnaire de ressources est conçu pour détecter si les paquets en association avec une session existante arrivent sur une nouvelle interface, et, en réponse, pour attribuer dynamiquement la session existante à une nouvelle voie.

28. Programme informatique comprenant des instructions exécutables par ordinateur intégrées dans un support lisible par ordinateur destiné à exécuter les étapes comprenant :
(a) l'attribution d'un premier ensemble d'adresses VoIP (IPᵥ₁-IPᵥ₄) à une pluralité d'hôtes VoIP (H1∼H4) dans une passerelle média (300) ;
**caractérisé par** :
(b) l'attribution d'un second ensemble d'adresses VoIP (IP11-IP13) à une pluralité d'interfaces réseau (l1∼l3) dans la passerelle média, dans lesquelles les adresses IP dans le second ensemble sont différentes des adresses IP dans le premier ensemble ;
(c) la diffusion d'informations d'accessibilité concernant au moins un des hôtes VoIP à un réseau (304) par l'intermédiaire d'au moins deux des interfaces réseau ; et
(d) la génération dynamique de tables de routage par interface en association avec chacune des interfaces réseau sur la base d'informations de routage reçues depuis un réseau.

29. Programme informatique selon la revendication 28 comprenant l'attribution de coûts à des associations internes entre les hôtes VoIP et les interfaces réseau.

30. Programme informatique selon la revendication 29 dans lequel l'attribution de coûts comprend l'attribution de coûts qui sont sensiblement égaux aux coûts de routage réseau vers des hôtes VoIP distants (1-15, 1-16), ou dans lequel l'attribution de coûts comprend l'attribution de coûts qui sont au moins d'un ordre de grandeur plus élevé que les coûts de routage réseau vers des hôtes VoIP distants, ou dans lequel l'attribution de coûts comprend l'attribution de coûts qui sont au moins d'un ordre de grandeur inférieur aux coûts de routage réseau vers des hôtes VoIP distants.

31. Programme informatique selon la revendication 28 comprenant la génération d'une liste des voies VoIP (314) comprenant des voies VoIP vers une passerelle média distante (302) sur la base des tables de routage par interface.

32. Programme informatique selon la revendication 31 dans lequel la génération d'une voie VoIP comprend la génération d'une liste des voies VoIP à l'aide d'un algorithme de sélection de voies à destination fixe qui comprend la sélection d'un nombre prédéterminé des meilleures voies depuis l'hôte VoIP vers une destination de voie VoIP fixe en association avec la passerelle média distante, ou
dans lequel la génération d'une liste des voies VoIP comprend la génération de la liste des voies VoIP à l'aide d'un algorithme de parcours matriciel qui comprend la génération d'une matrice de coûts de bout en bout (312) entre les hôtes VoIP et les hôtes VoIP en association avec la passerelle média distante et la sélection d'un nombre prédéterminé de voies aux coûts les plus bas depuis la matrice de coûts de bout en bout, ou
dans lequel la génération d'une liste des voies VoIP comprend la génération d'une liste des voies VoIP à l'aide d'un algorithme de sélection par paires qui comprend la génération d'une matrice de coûts indiquant les coûts des voies entre les hôtes VoIP et les hôtes VoIP en association avec la passerelle média distante, la sélection répétée des voies aux coûts les plus bas depuis la matrice de coûts, et le retrait des hôtes VoIP en association avec chacune des voies sélectionnées depuis la matrice.

33. Programme informatique selon la revendication 31 comprenant l'attribution de sessions de VoIP aux voies VoIP dans la liste des voies.

34. Programme informatique selon la revendication 33 dans lequel l'attribution de sessions de VoIP aux voies VoIP comprend l'attribution de sessions de VoIP aux voies VoIP sur la base de critères d'ingénierie du trafic.

35. Programme informatique selon la revendication 34 dans lequel les critères d'ingénierie du trafic comprennent des critères d'ingénierie du trafic basés sur les charges, des critères d'ingénierie du trafic basés sur les coûts, ou des critères d'ingénierie du trafic temporels.

36. Programme informatique selon la revendication 34 comprenant la mesure dynamique des conditions de trafic sur les voies VoIP et dans lequel l'attribution de sessions aux voies VoIP sur la base de critères d'ingénierie du trafic comprend l'attribution des sessions aux voies VoIP sur la base des conditions de trafic mesurées dynamiquement sur les voies.
